# EUROPEAN PATENT APPLICATION

(11) **EP 4 691 417 A1**
(43) Date of publication of application: **11.02.2026**
(21) Application number: 25193760.3
(22) Date of filing: 04.08.2025
(51) Int. Cl.: A61C 17/22

(54) **DENTAL CLEANING DEVICE**

(30) Priority: 06.08.2024 IT 202400018460
(71) Applicant: Clean OS S.r.l., 20141 Milano (IT)
(72) Inventor: ANZALONE, Francesco, 20139 Milano (IT); PASTORE, Pietro, 20141 Milano (IT); TUCCARI, Giovanni, 20122 Milano (IT); BAILINI, Alessandro, 20099 Sesto San Giovanni (MI) (IT)
(74) Representative: Botti & Ferrari S.p.A.

(57) **Abstract**

Dental cleaning device comprising a handle, a mouthpiece connected or connectable to said handle, a set of brush heads carried by the mouthpiece and configured for cleaning, during a use condition of said dental cleaning device, the user's teeth. The set of brush heads includes a front module configured to clean at least the user's incisor teeth, said front module (30) being movable by a first motion, said first motion including a translation motion or a rotational motion around a front module axis external to said front module or a roto-translation motion. The set of brush heads also includes at least a couple of back modules configured to clean at least the user's molar teeth, each of said back modules being movable by a respective second motion including a rotational motion around a respective back module rotation axis passing through the respective back module.

## Description

### FIELD OF THE INVENTION

The present invention relates to a dental cleaning device for oral care including a mouthpiece carrying a plurality of brush heads.

### BACKGROUND

Traditional electric toothbrushes are well-known products widely diffused all over the world. They are recommended by dentists and hygienists' community to help patients keeping their oral hygiene good and preventing the most common oral diseases. It is indeed agreed that such tools, if used correctly, are more than sufficient to ensure good oral hygiene.

However, their use is still based on the technique of the user, who needs to move it around the mouth to reach all teeth. Especially for patients with gingival and periodontal problems, incorrect or careless use results in worsening of the disease and the need for surgical interventions. For this reason, solutions that aim to limit the user's intervention and automate the cleaning have already been introduced. These solutions can be encompassed in the world of mouthpiece toothbrushes. Mouthpiece toothbrushes have an arch-shaped head with bristles that can potentially cover all surfaces of all teeth simultaneously: the existing solutions are primarily electric toothbrushes. These solutions limit the actions of the user, as they do not need to move the toothbrush inside the mouth: instead, the movement of the toothbrush cleans all the teeth simultaneously, also reducing the overall usage time. However, these solutions also present disadvantages, primarily less comfort and adaptability to different mouths.

As a first point, the Applicant points out that the devices of the state of the art may not provide oral cleaning in an effective and efficient manner for both incisor and molar teeth. Furthermore, the embodiments of the devices of the state of the art result in shapes and dimensions that may be uncomfortable for the user subject. Furthermore, the shapes and sizes of mouths and teeth vary, making it difficult to guarantee good cleaning quality and comfort with mouthpieces of fixed and limited sizes.

### SCOPE OF THE INVENTION

The scope of this invention is therefore to at least partially solve one or more of the drawbacks and/or limitations of the previous mouthpiece solutions.

A first objective is to provide a dental cleaning device able to improve oral hygiene of the subject.

A further objective is to provide a dental cleaning device able to improve its effectiveness during dental cleaning.

A further objective is to provide a dental cleaning device able to make dental cleaning fast and effective.

A further objective is to provide a dental cleaning device able to improve the overall efficiency of dental cleaning operations.

A further objective is to provide a dental cleaning device able to improve the subject's comfort during dental cleaning procedures.

A further objective is to provide a dental cleaning device able to automatize the process of cleaning teeth.

These scopes and more, which will appear more from the following description, are substantially achieved by a dental cleaning device in accordance with one or more of the following claims and/or aspects.

### SUMMARY SECTION

A 1st aspect refers to a dental cleaning device (1) comprising:
- a handle (2) configured for being grabbed by a user;
- a mouthpiece (10) coupled or connectable to said handle (2) and configured for being inserted into the user's mouth;
- a set of brush heads (20) carried by the mouthpiece (10) and configured for cleaning, during a use condition of said dental cleaning device (1), the user's teeth,
   wherein the set of brush heads (20) includes:
   ∘ a front module (30) configured to clean at least the user's incisor teeth, said front module (30) being movable by a first motion, said first motion including a translation motion or a rotational motion around a front module axis external to said front module (30) or a roto-translation motion;
   ∘ at least a couple of back modules (40) configured to clean at least the user's posterior teeth including at least one between a molar and a premolar, each of said back modules (40) being movable by a respective second motion, said second motion including a rotational motion around a respective back module rotation axis (R) passing through the respective back module;
- a motor (3) operatively connected to said set of brush heads (20) and configured to cause the first motion and the second motion of said set of brush heads (20).

A 2nd aspect is directed to a mouthpiece (10) connectable to a handle (2) of a dental cleaning device (1), said mouthpiece (10) being configured for being inserted into the user's mouth,
wherein said mouthpiece (10) carries a set of brush heads (20) configured for cleaning, during a use condition of said dental cleaning device, the user's teeth,
wherein the set of brush heads (20) includes:
   - a front module (30) configured to clean at least the user's incisor teeth, said front module (30) being movable by a first motion, said first motion including a translation motion or a rotational motion around a front module axis external to said front module (30) or a roto-translation motion;
   - at least a couple of back modules (40) configured to clean at least the user's posterior teeth including at least one between a molar and a premolar, each of said back modules (40) being movable by a respective second motion, said second motion including a rotational motion around a respective back module rotation axis passing through the respective back module.

In a 3rd aspect according to the preceding aspect, wherein the mouthpiece (10) includes an attachment portion configured to be attached to a respective attachment portion of the handle (2) of the dental cleaning device (1), the dental cleaning device (1) being optionally according to aspect 1.

An aspect 3 bis refers to a dental cleaning device (1) comprising:
- a handle (2) configured for being grabbed by a user;
- a mouthpiece (10) coupled or connectable to said handle (2) and configured for being inserted into the user's mouth;
- a set of brush heads (20) carried by the mouthpiece (10) and configured for cleaning, during a use condition of said dental cleaning device (1), the user's teeth,
   wherein the set of brush heads (20) includes:
   ∘ a front module (30) configured to clean at least the user's incisor teeth, said front module (30) being movable by a first motion;
   o at least a couple of back modules (40) configured to clean at least the user's posterior teeth including at least one between a molar and a premolar, each of said back modules (40) being movable by a respective second motion;
- a motor (3) operatively connected to said set of brush heads (20) and configured to cause the first motion and the second motion of said set of brush heads (20).

In an aspect 3 ter according to the preceding aspect, said first motion includes a translation motion or a rotational motion around a front module axis external to said front module (30) or a roto-translation motion. In an aspect 3 quater according to any one of the two preceding aspects, said second motion includes a rotational motion around a respective back module rotation axis (R) passing through the respective back module.

In a 4th aspect according to any one of the preceding aspects, the dental cleaning device comprises a transmission system connecting kinematically the motor (3) to the brush heads (20).

In a 5th aspect according to the preceding aspect, the transmission system connects in terms of motion the front module (30) to the back modules (40), the motor (3) being kinematically connected to the front module (30) and to the back modules (40) by said transmission system.

In a 6th aspect according to any one of the preceding aspects in combination with aspect 4, the transmission system is configured to cause the first motion of the front module (30) simultaneously to the second motion of the back modules (40).

In a 7th aspect according to any one of the preceding aspects, the motor (3) is configured to cause the first motion of the front module (30) simultaneously to the second motion of the back modules (40).

In a 8th aspect according to any one of the preceding aspects, the first motion is simultaneous to the second motion.

In a 9th aspect according to any one of the preceding aspects, the first motion defines an alternating motion, optionally either a translation alternating motion or a rotational alternating motion or a roto-translating alternating motion.

In a 10th aspect according to any one of the preceding aspects, the second motion defines an alternating motion, optionally a rotational alternating motion around the back module rotation axis of the respective back module.

In a 11th aspect according to any one of the preceding aspects, said front module (30) is movable by the first motion approaching and departing from said back modules (40).

In a 12th aspect according to any one of the preceding aspects, the mouthpiece (10) defines an arcuate profile.

In a 13th aspect according to the preceding aspect, the arcuate profile of the mouthpiece includes:
- a front portion (11), the front module (30) being located at the front portion (11),
- a left branch (12) carrying, or configured to carry, at least one left back module (40L) of said couple of back modules (40) of the brush heads (20),
- a right branch (13) carrying, or configured to carry, at least one right back module (40R) of said couple of back modules (40) of the brush heads (20).

In a 14th aspect according to the preceding aspect, the front portion (11) is interposed, along said arcuate profile, in connection between the left branch (12) and the right branch (13).

In a 15th aspect according to any one of the preceding aspects in combination with aspect 13, the front module (30) is movable with respect to said front portion (11) of the arcuate profile of the mouthpiece approaching and departing from said left branch (12) and said right branch (13).

In a 16th aspect according to any one of the preceding aspects, the mouthpiece (10) is fixed with respect to the handle (2).

In a 17th aspect according to any one of the preceding aspects, the front module (30) is movable by said first motion with respect to the mouthpiece (10).

In a 18th aspect according to any one of the preceding aspects, the back modules (40) are movable by said second motion with respect to the mouthpiece (10).

In a 19th aspect according to any one of the preceding aspects, the dental cleaning device (1) extends along a length direction (X) and a width direction (Y) orthogonal to said length direction (X).

In a 20th aspect according to the preceding aspect, the mouthpiece and the handle are aligned along said length direction (X).

In a 21st aspect according to any one of the preceding aspects in combination with aspect 19, the left branch (12) and the right branch (13) of the mouthpiece (10) are spaced each other along said width direction (Y). In a 22nd aspect according to any one of the preceding aspects in combination with aspect 19, the length direction (X) crosses the front portion (11) of the mouthpiece (10) optionally orthogonally.

In a 23rd aspect according to any one of the preceding aspects in combination with aspect 19:
- the first motion includes the translation motion which is directed along the width direction of the dental cleaning device, and wherein said translation motion is orthogonal to the back module rotation axes of the back modules (40);
   or
- the first motion includes the rotational motion around said front module axis, said front module axis being positioned along a virtual straight line interposed between the left branch (12) and the right branch (13) and equidistant from the left branch (12) and the right branch (13).

In a 24th aspect according to any one of the preceding aspects, the front module axis of the front module (30) is parallel to the back module rotation axis (R) of the back modules (40).

In a 25th aspect according to any one of the preceding aspects in combination with aspect 13, the transmission system is configured to move, according to the second motion, the left back module (40L) of the left branch (12) and the right back module (40R) of the right branch (13) simultaneously and in the same direction.

In a 26th aspect according to any one of the preceding aspects in combination with aspect 13, during a use condition of the dental cleaning device:
- when the left back module (40L) of the left branch (12) rotates clockwise, the right back module (40R) of the right branch (13) rotates clockwise;
- when the left back module (40L) of the left branch (12) rotates counter-clockwise, the right back module (40R) of the right branch (13) rotates counter-clockwise.

In a 27th aspect according to any one of the preceding aspects in combination with aspect 13, the left back module (40L) includes a first left back module and a second left back module, optionally the left back module further including a third left back module.

In an aspect 27 bis according to the preceding aspect, the left back module (40L) includes a fourth left back module, the fourth left back module being optionally configured to contact a left wisdom tooth of the user, said left wisdom tooth defining a third left molar of the user.

In a 28th aspect according to any one of the preceding aspects in combination with aspect 13, the right back module (40R) includes a first right back module and a second right back module, optionally the right back module (40R) further including a third right back module.

In an aspect 28 bis according to the preceding aspect, the right back module (40R) includes a fourth right back module, the fourth right back module being optionally configured to contact a right wisdom tooth of the user, said right wisdom tooth defining a third right molar of the user. In a 29th aspect according to any one of the preceding aspects in combination with aspect 27 and 27 bis, the first left back module and the second left back module, and optionally also the third left back module, are positioned consecutively with each other along the left branch (12) of the mouthpiece (10).

In a 30th aspect according to any one of the preceding aspects from 27 to 28bis, when the first left back module, the second left back module, and optionally the third left back module, of the left branch (12) rotate clockwise, the first right back module, the second right back module, and optionally the third right back module, of the right branch (13) rotate clockwise.

In a 31st aspect according to any one of the preceding aspects in combination with aspect 27 and 28, when the first left back module, the second left back module and optionally the third left back module of the left branch (12) rotate counter-clockwise, the first right back module, the second right back module and optionally the third right back module of the right branch (13) rotate counter-clockwise.

In a 32nd aspect according to any one of the preceding aspects in combination with aspect 28, the first right back module and a second right back module, and optionally also the third right back module, are positioned consecutively with each other along the right branch (13) of the mouthpiece (10).

In a 32nd aspect according to any one of the preceding aspects in combination with aspect 28, the at least one left back module (40L) is in a different number than the at least one right back module (40R).

In a 33rd aspect according to any one of the preceding aspects in combination with aspect 13, the left branch (12) extends between a first portion attached to the front portion (11) and a second free end, and the right branch (13) extends between a respective first portion attached to the front portion (11) and a second free end,
wherein the second free end of the left branch (12) is spaced from the second free end of the right branch (13).

In a 34th aspect according to any one of the preceding aspects in combination with aspect 12, the arcuate profile of the mouthpiece (10) is "C" or "U" shaped.

In a 35th aspect according to any one of the preceding aspects, the back module rotation axes (R) of the back modules (40) are parallel to each other.

In a 36th aspect according to any one of the preceding aspects in combination with aspect 13, the back module rotation axis (R) of the left back module (40L) is parallel to the back module rotation axis of the right back module (40R).

In a 37th aspect according to any one of the preceding aspects in combination with aspect 27, the back module rotation axis of the first left back module and the back module rotation axis of the second left back module are parallel to each other.

In a 38th aspect according to any one of the preceding aspects in combination with aspect 28, the back module rotation axis of the first right back module and the back module rotation axis of the second right back module are parallel to each other.

In a 39th aspect according to any one of the preceding aspects in combination with aspects 27 and 28, the back module rotation axis of the first left back module, the back module rotation axis of the second left back module, the back module rotation axis of the first right back module and the back module rotation axis of the second right back module are parallel to each other.

In a 40th aspect according to any one of the preceding aspects, if the first motion includes the rotational or roto-translation motion around the front module axis, the back module rotation axis of the back modules (40) is parallel to the front module axis.

In a 41st aspect according to any one of the preceding aspects, if the first motion includes the translation motion, the back module rotation axis of the back modules (40) is orthogonal to a direction of said translation motion.

In a 42nd aspect according to any one of the preceding aspects, said front module (30) is movable by said first motion back and forth in an alternating manner during a use condition of said dental cleaning device at a predefined first motion frequency, said first motion frequency being optionally comprised between 16 Hz and 34 Hz.

In a 43rd aspect according to any one of the preceding aspects, each of said back modules (40) is movable by said second motion alternating clockwise and counter-clockwise movement, during the use condition of said dental cleaning device, at a predefined second motion frequency, said second motion frequency being optionally comprised between 16 HZ and 34 Hz.

In a 44th aspect according to any one of the two preceding aspects, the first motion frequency is substantially equal to the second motion frequency.

In a 45th aspect according to any one of the preceding aspects, the front module (30) is movable by the first motion along a predefined path, said path extending orthogonally to the back module rotation axes (R) of the back modules (40).

### Front module (30)

In a 46th aspect according to any one of the preceding aspects in combination with aspect 13, a single mouthpiece virtual plane (VP) passes through the front portion (11), the left branch (12) and the right branch (13).

In a aspect 46 bis according to any one of the preceding aspects, the front module (30) is configured to receive only incisor teeth and optionally also canine teeth.

In a 47th aspect according to any one of the preceding aspects, a mouthpiece virtual plane (VP) is parallel and coincident to the arcuate profile of the mouthpiece (10).

In a 48th aspect according to any one of the two preceding aspects, said mouthpiece virtual plane (VP) separates an upper side from a lower side of the mouthpiece (10),
wherein the front module (30) and the back modules (40) are arranged on one between the lower side and the upper side, in particular the front module (30) and the back modules (40) being both arranged on the lower side.

In a 49th aspect according to any one of the preceding aspects in combination with aspect 46 and/or 47, the front module (30) extends along a curvilinear or semi-circular path parallel to said virtual plane (VP).

In a 50th aspect according to the preceding aspect, said path angularly extends by an angle comprised between 90° and 180°, in particular between 100° and 135°.

In an aspect 50bis according to any one of the two preceding aspects, the front module (30) extends along a semi-circular path, wherein the first lateral wall (31) and the second lateral wall (32) of the front module (30) are concentric.

In a 51st aspect according to any one of the preceding aspects, the front module (30) includes a bottom wall (33), a first lateral wall (31) and a second lateral wall (32) facing the first lateral wall (31), wherein the bottom wall (33) is interposed in connection between the first lateral wall (31) and the second lateral wall (32).

In a 52nd aspect according to the preceding aspect, the first lateral wall (31) and the second lateral wall (32) extend transversal to said mouthpiece virtual plane defining a front module channel in between, in particular wherein said front module channel is bounded by the first lateral wall (31), the second lateral wall (32) and the bottom wall (33).

In a 53rd aspect according to the preceding aspect, the front module channel is configured for receiving at least incisor teeth of the user.

In a 54th aspect according to any one of the two preceding aspects, the front module channel is configured for receiving also canine teeth of the user.

In a 55th aspect according to any one of the three preceding aspects, the front module channel is configured for receiving also premolars of the user.

In a 56th aspect according to any one of the preceding aspects, the front module (30) comprises bristles (35) optionally arranged in said front module channel.

In a 57th aspect according to the preceding aspect, said bristles (35) of the front module (30) extend along a direction parallel to said mouthpiece virtual plane (VP).

In an aspect 57 bis according to the aspect 56, said bristles (35) of the front module (30) extend along a direction which is transversal to the mouthpiece virtual plane (VP).

In an aspect 57 ter according to the preceding aspect, said bristles (35) of the front module (30) extend from the first lateral wall (31) and/or the second lateral wall (32) transversal to the mouthpiece virtual plane (VP) away from the bottom wall (33) of the front module (30).

In an aspect 57 quater according to any one of the preceding two aspects, the bristles (35) of the front module (30) deviate from parallelism with the mouthpiece virtual plane (VP) by a front bristle angle comprised between 5° and 50°, in particular between 15° and 45°, more in particular between 25° and 45°, more in particular between 35° and 45°.

In an aspect 57 quinquies according to any one of the preceding three aspects, the bristles (35) of the front module (30) attached to the first lateral wall (31) deviate from parallelism with the mouthpiece virtual plane (VP) by a front bristle angle comprised between 5° and 50°, in particular between 15° and 45°, more in particular between 25° and 45°, more in particular between 35° and 45°,
and the bristles (35) of the front module (30) attached to the second lateral wall (32) are parallel to the mouthpiece virtual plane (VP).

In an aspect 57 sexies according to any one of the preceding four aspects, the bristles (35) of the front module (30) attached to the first lateral wall (31) deviate from parallelism with the mouthpiece virtual plane (VP) by a first front bristle angle, and the bristles (35) of the front module (30) attached to the second lateral wall (32) deviate from parallelism with the mouthpiece virtual plane (VP) by a second front bristle angle, wherein the first front bristle angle is different from the second front bristle angle.

In a 58th aspect according to any one of the preceding aspects in combination with aspect 56, said bristles (35) of the front module (30) include a first set (35a) of bristles and a second set (35b) of bristles, wherein the first set (35a) of bristles are attached to the first lateral wall (31), and wherein the second set (35b) of bristles are attached to the second lateral wall (32).

In a 59th aspect according to the preceding aspect, the first set (35a) of bristles and the second set (35b) of bristles are substantially parallel each other.

In a 60th aspect according to any one of the preceding aspects in combination with aspect 58, the first set (35a) of bristles is spaced from the second set (35b) of bristles by a distance comprised between 1 mm and 4 mm.

In a aspect 60bis according to any one of the preceding aspects in combination with aspect 56, said bristles (35) are fixed with respect to the first lateral wall (31) and the second lateral wall (32).

In a 61st aspect according to any one of the preceding aspects in combination with aspect 51, the first lateral wall (31) and the second lateral wall (32) are spaced each other by a distance comprised between 6 mm and 15 mm, in particular between 7 mm and 10 mm.

In a 62nd aspect according to any one of the preceding aspects in combination with aspect 51, the first lateral wall (31) of the front module (30) is external to the arcuate profile of the mouthpiece (10), and the second lateral wall (32) of the front module (30) is internal to the arcuate profile of the mouthpiece (10).

In a 63rd aspect according to any one of the preceding aspects in combination with aspect 51, the first lateral wall (31) includes bristles, in particular the first set (35a) of bristles, up to a first height measured from the bottom wall (33) of the front module (30), and wherein the second lateral wall (32) includes bristles, in particular the second set (35b) of bristles, up to a second height measured from the bottom wall of the front module (30),
and wherein said first height is greater than said second height.

In a 64th aspect according to the preceding aspect, said first height is greater than said second height by at least 1 mm or 2 mm.

In a 65th aspect according to any one of the two preceding aspects, said first height and second height are measured orthogonally to the mouthpiece virtual plane (VP).

In a 66th aspect according to any one of the preceding aspects in combination with aspect 46 and/or 47, a section of the front module (30) along a plane orthogonal to said mouthpiece virtual plane defines a "C" or "U" profile.

In a 67th aspect according to any one of the preceding aspects in combination with aspect 51, the first lateral wall (31) of the front module (30) is parallel to the second lateral wall (32) of the front module (30).

In a 68th aspect according to any one of the preceding aspects in combination with aspect 51, the bottom wall (33) of the front module (30) is orthogonal to the first lateral wall (31) and the second lateral wall (32) of the front module (30).

In a 69th aspect according to any one of the preceding aspects in combination with aspect 51, the bottom wall (33) of the front module (30) is free of bristles, in particular the bottom wall (33) of the front module (30) does not carry bristles.

In a 70th aspect according to any one of the preceding aspects, the front module (30) and the back modules (40) include respective bristles (35, 45) configured for contacting user's teeth during a use condition of the dental cleaning device (1).

In an aspect 70 bis according to any one of the preceding aspects, the front module (30) comprises a first front module and a second front module distinct and separated to each other.

In an aspect 70 ter according to the preceding aspect, the first front module and the second front module are both movable according to the first motion.

In an aspect 70 quater according to any one of the preceding two aspects, the first front module and the second front module are movable simultaneously optionally in the same direction.

In an aspect 70 quinquies according to any one of the preceding aspects in combination with aspect 70 and aspect 13, the first front module and the second front module are movable simultaneously in opposite directions so that when the first front module moves towards the left branch (12) of the mouthpiece (10) according to the first motion, the second front module moves towards the right branch (13) of the mouthpiece (10), and vice versa.

In an aspect 70 sexies according to any one of the preceding aspects in combination with aspect 70 and aspect 13, the first front module is closer to the left branch (12) than to the right branch (13) of the mouthpiece (10), and the second front module is closer to the right branch (13) than to the left branch (12) of the mouthpiece (10).

In an aspect 70 septies according to any one of the preceding aspects in combination with aspect 70 and aspect 19, the first front module and the second front module are symmetric with respect to the length direction (X).

In an aspect 70 octies according to any one of the preceding aspects from aspect 70 to aspect 70 sexies, the first front module is different in shape and/or dimensions with respect to the second front module.

### Back modules (40)

In a 71st aspect according to any one of the preceding aspects, each of the back modules (40) includes a bottom wall (43), a first lateral wall (41) and a second lateral wall (42) facing the first lateral wall (41), wherein the bottom wall (43) is interposed in connection between the first lateral wall (41) and the second lateral wall (42).

In a 72nd aspect according to the preceding aspect, the first lateral wall (41) and the second lateral wall (42) of the back modules (40) extend transversal, in particular orthogonally, to said mouthpiece virtual plane (VP).

In a 73rd aspect according to any one of the preceding aspects in combination with aspect 71, each of the back modules (40) is configured for receiving said posterior teeth of the user between said first lateral wall (41) and second lateral wall (42) of the back module (40).

In a aspect 73 bis according to any one of the preceding aspects, the back module is configured for receiving only the posterior teeth of the user, in particular excluding incisor and canine teeth.

In a 74th aspect according to any one of the preceding, the back modules (40) comprise bristles (45).

In a 75th aspect according to any one of the preceding aspects in combination with aspect 71, the bristles (45) of the back module (40) are attached to said first lateral wall (41) and said second lateral wall (42) of the back modules (40).

In a 76th aspect according to any one of the preceding aspects in combination with aspect 71, said bristles (45) are attached to said first lateral wall (41), said second lateral wall (42), and said bottom wall (43) of the back modules (40).

In a 77th aspect according to any one of the preceding aspects in combination with aspect 71, the bristles (45) of the back modules (40) attached to said first lateral wall (41) and second lateral wall (42) extend along a direction parallel to said mouthpiece virtual plane (VP).

In a 78th aspect according to any one of the preceding aspects in combination with aspect 71, the bristles (45) of the back modules (40) attached to said bottom wall (43) extend along a direction orthogonal to said mouthpiece virtual plane (VP).

In a 79th aspect according to any one of the preceding aspects in combination with aspect 71, the bristles (45) of the back modules (40) attached to said first lateral wall (41) and second lateral wall (42) are parallel to each other.

In a 80th aspect according to any one of the preceding aspects in combination with aspect 71, the back module rotation axis (R) of each back module (40) crosses the bristles (45) of the back modules (40) attached to said bottom wall (43).

In a 81st aspect according to any one of the preceding aspects in combination with aspect 71, the bristles (45) of the back modules (40) attached to said bottom wall (43) are positioned around the back module rotation axis (R) of the respective back module (40).

In a 82nd aspect according to any one of the preceding aspects in combination with aspect 71, said bristles (45) of each back module (40) include a first set (45a) of bristles and a second set (45b) of bristles, wherein the first set (45a) of bristles are attached to the first lateral wall (41), and wherein the second set (45b) of bristles are attached to the second lateral wall (42).

In a 83rd aspect according to the preceding aspect, the first set (45a) of bristles and the second set (45b) of bristles of the back module (40) are substantially parallel each other.

In a aspect 83 bis according to any one of the preceding two aspects, the first set (45a) of bristles of the back module is spaced from the second set (45b) of bristles of the same back module (40) by a distance comprised between 1 mm and 4 mm.

In an aspect 83 ter according to aspect 71, said bristles (45) of the back modules (40) extend along a direction which is transversal to the mouthpiece virtual plane (VP).

In an aspect 83 quater according to the preceding aspect, said bristles (45) of the back modules (40) extend from the first lateral wall (41) and/or the second lateral wall (42) transversal to the mouthpiece virtual plane (VP) away from the bottom wall (43) of the back module (40).

In an aspect 83 quinquies according to any one of the preceding two aspects, the bristles (45) of the back modules (40) deviate from parallelism with the mouthpiece virtual plane (VP) by a back bristle angle comprised between 5° and 50°, in particular between 15° and 45°, more in particular between 25° and 45°, more in particular between 35° and 45°.

In an aspect 83 sexies according to any one of the preceding three aspects, the bristles (45) of at least one back module between said back modules (40), optionally of all the back modules, attached to the first lateral wall (41) of said at least one back module deviate from parallelism with the mouthpiece virtual plane (VP) by a back bristle angle comprised between 5° and 50°, in particular between 15° and 45°, more in particular between 25° and 45°, more in particular between 35° and 45°,
and the bristles (45) of said at least one back module (40) attached to the second lateral wall (42) are parallel to the mouthpiece virtual plane (VP).

In an aspect 83 septies according to any one of the preceding four aspects, the bristles (45) of the back modules (40) attached to the first lateral wall (41) deviate from parallelism with the mouthpiece virtual plane (VP) by a first back bristle angle, and the bristles (45) of the back module (40) attached to the second lateral wall (42) deviate from parallelism with the mouthpiece virtual plane (VP) by a second back bristle angle, wherein the first back bristle angle is different from the second back bristle angle.

In a 84th aspect according to any one of the preceding aspects in combination with aspect 71, the first lateral wall (41) and the second lateral wall (42) of each back module (40) are spaced each other by a distance comprised between 15 mm and 40 mm, in particular between 20 mm and 30 mm, optionally between 24 mm and 26 mm.

In a 85th aspect according to any one of the preceding aspects in combination with aspect 82, the back module rotation axis (R) of each back module does not cross the first set (45a) of bristles of the back module (40) and the second set (45b) of bristles of the back module (40).

In a aspect 85 bis according to any one of the preceding aspects in combination with aspect 74, said bristles (45) of the back modules (40) are fixed in position with respect to the first lateral wall (41), said second lateral wall (42), and optionally said bottom wall (43), of the back modules (40)

In a 86th aspect according to any one of the preceding aspects in combination with aspect 71, the first lateral wall (41) of each back module (40) faces externally to the arcuate profile of the mouthpiece (10), and the second lateral wall (42) faces internally to the arcuate profile of the mouthpiece (10).

In a 87th aspect according to any one of the preceding aspects in combination with aspect 71, the first lateral wall (41) of the back module (40) includes bristles up to a first height measured from the bottom wall (43) of the back module, and wherein the second lateral wall (42) of the back module (40) includes bristles up to a second height measured from the bottom wall (43) of the back module,
and wherein said first height is greater than said second height, in particular wherein said first height is greater than said second height by at least 1 mm or 2 mm.

In a 88th aspect according to the preceding aspect, said first height and second height are measured orthogonally to the mouthpiece virtual plane.

In a 89th aspect according to any one of the preceding aspects in combination with aspect 71, a section of each back module along a plane, parallel and coincident to the respective back module rotation axis (R) and orthogonal to said first and/or second lateral walls (41, 42) of the respective back module, defines a "C" or "U" profile.

In a 90th aspect according to any one of the preceding aspects in combination with aspect 71, the first lateral wall (41) of each back module (40) is parallel to the second lateral wall (42) of the same back module (40). In a 91st aspect according to any one of the preceding aspects in combination with aspect 71, the bottom wall (43) of the back module (40) is orthogonal to the first lateral wall (41) and the second lateral wall (42) of the back module (40).

In a 92nd aspect according to any one of the preceding aspects in combination with aspect 71, each back module includes a bottom set (45c) of bristles attached to the bottom wall (43) of said back module (40), the bottom set (45c) of bristles extending along a direction parallel to the respective back module rotation axis (R).

In a 93rd aspect according to the preceding aspect, the bottom set (45c) of bristles extending along a direction orthogonal to the extension direction of the bristles attached to the first and second lateral wall of the back module.

In a 94th aspect according to any one of the preceding aspects in combination with aspect 92, the bottom set (45c) of bristles of the back modules (40) extend in height between a bottom end, attached to the bottom wall, and a free portion, said free portion having a wedge shape wherein in particular a maximum height of said free portion of the bottom set of bristles is at a central portion thereof.

In a 95th aspect according to any one of the preceding aspects, the bristles (45) of the back modules (40) are configured for contacting user's teeth during a use condition of the dental cleaning device.

In a 96th aspect according to any one of the preceding aspects, the back modules (40) are coupled to the mouthpiece (10) by a removable joint (44).

In a 97th aspect according to the preceding aspect, said removable joint includes an interlock.

In a 98th aspect according to any one of the preceding aspects, the mouthpiece (10) includes coupling pins (14) coupling or configured to couple a coupling portion (44a) of the back modules (40), said coupling pins (14) emerging in height orthogonally to the mouthpiece virtual plane (VP).

In a 99th aspect according to any one of the preceding aspects in combination with aspect 96, the removable joint (44) includes said coupling pins (14).

### Motion-transfer rod (50)

In a 100th aspect according to any one of the preceding aspects in combination with aspect 4, the transmission system includes a motion-transfer rod (50) operatively connected to the motor (3).

In a 101st aspect according to the preceding aspect, said motion-transfer rod (50) is configured for moving alternately according to a predefined movement frequency.

In a 102nd aspect according to the preceding aspect in combination with aspects 42 and 43, said predefined movement frequency is equal to the first motion frequency and the second motion frequency.

In a 103rd aspect according to any one of the preceding aspects in combination with aspect 100, said motion-transfer rod (50) extends along the arcuate profile of the mouthpiece (10).

In a 104th aspect according to any one of the preceding aspects in combination with aspect 100, said motion-transfer rod (50) includes:
- a left tract (52) carried by the left branch (12) of the mouthpiece (10) and extending along said left branch (12),
- a right tract (53) carried by the right branch (13) of the mouthpiece (10) and extending along said right branch (13),
- a front tract (51) located at the front portion (11) of the mouthpiece (10), the front tract (51) being interposed in connection between the right tract (53) and the left tract (52) of the motion-transfer rod (50).

In a 105th aspect according to any one of the preceding aspects in combination with aspect 100, the motion-transfer rod (50) is configured to move the front module (30) according to the first motion, and to move the back modules (40) according to the second motion.

In a 106th aspect according to any one of the preceding aspects in combination with aspect 100, the motion-transfer rod (50) is in one piece, in particular wherein the left tract, right tract and front tract of the motion-transfer rod (50) are in one piece.

In a 107th aspect according to any one of the preceding aspects in combination with aspect 100, the motion-transfer rod (50) is made of plastic material.

In a 108th aspect according to any one of the preceding aspects in combination with aspect 100, the motion-transfer rod (50) is flexible at least around an axis orthogonal to the mouthpiece virtual plane (VP), in particular said axis being variable in position along the motion-transfer rod (50).

In a 109th aspect according to any one of the preceding aspects in combination with aspect 100, the motion-transfer rod (50) is configured to flex, in particular to bend, to transfer an input motion from the motor (3) to the brush heads (20).

In a 110th aspect according to any one of the preceding aspects in combination with aspect 100, the motion-transfer rod (50) is configured to flex, in particular to bend, to transfer an input motion from the motor (3) to:
- the front module (30) to cause the first motion of the front module (30), and
- the back modules (40) to cause the second motion of the back modules (40).

In a 111th aspect according to any one of the preceding aspects in combination with aspect 100, the motion-transfer rod (50) is configured to flex, in particular to bend, while moving with respect to the mouthpiece (10).

In a 112th aspect according to any one of the preceding aspects in combination with aspect 100, the front module (30) is fixed to the front tract (51) of the motion-transfer rod (50).

In a 113th aspect according to any one of the preceding aspects in combination with aspect 104, the front tract (51) of the motion-transfer rod (50) is movable according to the first motion.

In a 114th aspect according to any one of the preceding aspects in combination with aspect 104, the right tract (53) of the motion-transfer rod (50) is movable along a first direction, optionally a straight direction, transversal to said first motion.

In a 115th aspect according to any one of the preceding aspects in combination with aspect 104, the left tract (52) of the motion-transfer rod (50) is movable along a second direction, optionally a straight direction, transversal to said first motion.

In a 116th aspect according to any one of the preceding aspects, the motion-transfer rod (50) is operatively connected to the front module (30) and the back modules (40).

In a 117th aspect according to any one of the preceding aspects, the motion-transfer rod (50) is operatively connected to the back modules (40) through a kinematic joint (55).

In a 118th aspect according to the preceding aspect, the kinematic joint (55) is configured to convert a motion, optionally a translation motion, of the motion-transfer rod (50) to the second motion of the back modules (40).

In a 119th aspect according to any one of the preceding aspects in combination with aspect 117, the kinematic joint (55) is positioned on the right tract (53) and the left tract (52) of the motion-transfer rod (50) and on the right branch (13) and the left branch (12) of the mouthpiece (10).

In a 120th aspect according to any one of the preceding aspects, each of the back modules (40) includes a respective peripheric portion (47) having a recess (46).

In a 121st aspect according to the preceding aspect, the kinematic joint (55) includes kinematic pins (54), fixed on the motion-transfer rod (50), and each recess (46) of the back modules (40).

In a 122nd aspect according to the preceding aspect, each kinematic pin (54) is received in the recess (46) of the respective back module (40), wherein said kinematic pins (54) are configured to interact with said recess (46) of the back modules (40) to cause the second motion, in particular by transferring a linear motion of the motion-transfer rod (50) to the back modules (40) through said kinematic joint (55).

In a 123rd aspect according to any one of the preceding aspects in combination with aspect 121, the kinematic pins (54) are positioned on the right tract (53) and the left tract (52) of the motion-transfer rod (50).

In a 124th aspect according to any one of the preceding aspects in combination with aspect 121, the kinematic pins (54) are equal in number to the number of the back modules (40).

In a 125th aspect according to any one of the preceding aspects in combination with aspect 121, the kinematic pins (54) emerge from the motion-transfer rod (50) towards the back modules (40).

In a 126th aspect according to any one of the preceding aspects in combination with aspect 121, the kinematic pins (54) emerge in height, in particular towards the lower side of the mouthpiece (10), from the motion-transfer rod (50) along a direction orthogonal to a movement direction of the motion-transfer rod (50), in particular orthogonally to the mouthpiece virtual plane.

In an aspect 126 bis according to any one of the preceding aspects from 121 to 125, the kinematic pins (54) emerge from the motion-transfer rod (50) along a direction parallel to the mouthpiece virtual plane (VP). In an aspect 126 ter according to the preceding aspect, the kinematic pins (54) emerge inwards the arcuate profile of the mouthpiece (10).

In an aspect 126 quater according to any one of the preceding two aspects, the kinematic pins (54) are lobe-shaped.

In an aspect 126 quinquies according to any one of the preceding three aspects, the kinematic pins (54) extend between a first end attached to the motion-transfer rod (50) and a second free end, wherein said second free is rounded.

In an aspect 126 sexies according to the preceding aspect, said second free end is configured to enter the recess (46) of the respective peripheric portion (47) of the back modules (40).

In an aspect 126 septies according to any one of the preceding five aspects, the kinematic pins (54) do not emerge from the motion-transfer rod (50) along a direction orthogonal to the mouthpiece virtual plane (VP). In a 127th aspect according to any one of the preceding aspects, the motion-transfer rod (50) contacts, or is configured to contact, a peripheric portion (47) of the back modules (40) to cause the second motion of the back modules (40).

In a 128th aspect according to any one of the preceding aspects, the peripheric portion (47) of the back module is spaced from the respective back module rotation axis (R).

In a 129th aspect according to any one of the preceding aspects in combination with aspect 117, the contact between the motion-transfer rod (50) and the peripheric portion (47) of the back modules (40) defines said kinematic joint (55).

In a 130th aspect according to any one of the preceding aspects in combination with aspect 117, the mouthpiece (10) includes a groove guide (15) defining a channel extending along the front portion (11), the left branch (12) and the right branch (13) of the mouthpiece (10), wherein the motion-transfer rod (50) is arranged at least partially within said groove guide (15).

In a 131st aspect according to the preceding aspect, the motion-transfer rod (50) is configured to move, in particular to slide, with respect to the mouthpiece (10) within said groove guide (15) to cause the first motion of the front module (30), and to cause the second motion of the back modules (40).

In a 132nd aspect according to any one of the preceding aspects in combination with aspect 130, the motion-transfer rod (50) is configured to flex while moving within said groove guide (15) to follow a trajectory of said channel of the groove guide (15).

In a 133rd aspect according to any one of the preceding aspects in combination with aspect 130, said groove guide (15) defines an arcuate profile.

In a 134th aspect according to the preceding aspect, said groove guide (15) follows the same arcuate profile of the mouthpiece (10).

In a 135th aspect according to any one of the preceding aspects in combination with aspect 130, said groove guide (15) comprises a rear wall (15c) and a first side wall (15a) attached transversally to the rear wall (15c).

In an aspect 135 bis according to the preceding aspect, said groove guide (15) comprises a second side wall (15b), wherein the first side wall (15a) faces the second side wall (15b), and wherein the rear wall (15c) is interposed in connection between the first side wall (15a) and the second side wall (15b).

In an aspect 135 ter according to any one of the aspects from 130 to 135 bis and in combination with any one of aspects from 126 bis to 126 septies, said kinematic pins (54) extend, optionally entirely, within said groove guide.

In an aspect 135 quater according to the preceding aspect, at least a major portion of the kinematic pins (54) is arranged within the groove guide.

In an aspect 135 quinquies according to any one of the preceding two aspects, said kinematic pins (54) do not emerge outside the groove guide (15).

In an aspect 135 sexies according to any one of the preceding three aspects, the motion-transfer rod (50) abuts against the first side wall (15a) and is spaced from the second side wall (15b).

In a 136th aspect according to any one of the preceding aspects in combination with aspect 135 bis , the first side wall (15a) and the second side wall (15b) are plane and parallel to each other.

In a 137th aspect according to any one of the preceding aspects in combination with aspect 135 bis, the rear wall (15c) is plane and orthogonal to said first side wall (15a) and/or the second side wall (15b).

In a 138th aspect according to any one of the preceding aspects in combination with aspect 135 bis, the first side wall (15a) is spaced from the second side wall (15b) by a distance comprised between 1 mm and 7 mm, in particular between 2 mm and 5 mm.

In a 139th aspect according to any one of the preceding aspects in combination with aspect 135 bis, the motion-transfer rod (50) is located between the first side wall (15a) and the second side wall (15b) of the groove guide (15).

In a 140th aspect according to any one of the preceding aspects in combination with aspect 135 bis, the motion-transfer rod (50) has a width, measured along a direction crossing the first side wall (15a) and the second side wall (15b), so that a clearance is provided between the motion-transfer rod (50) and the first side wall (15a) and/or the second side wall (15b).

In a 141st aspect according to the preceding aspect, said clearance is comprised between 0,2 mm and 0,8 mm, in particular between 0,35 mm and 0,65 mm.

In a 142nd aspect according to any one of the two preceding aspects, said clearance is calculated as a difference between a distance between the first side wall (15a) and the second side wall (15b), and said width of the motion-transfer rod (50).

In a 143rd aspect according to any one of the preceding aspects in combination with aspect 100, said motion-transfer rod (50) includes two or more protrusions (56), optionally three or four or more protrusions (56), extending towards the first side wall (15a) and the second side wall (15b) of the groove guide (15), wherein said protrusions (56) are configured to slide over the first side wall (15a) and the second side wall (15b) of the groove guide (15).

In a 144th aspect according to the preceding aspect, a clearance is provided between said protrusions and the first side wall (15a) and the second side wall (15b) of the groove guide (15) to allow movement of the motion-transfer rod (50) within the groove guide (15).

In a 145th aspect according to any one of the preceding aspects in combination with aspect 143, said protrusions (56) have rounded shape.

In a 146th aspect according to any one of the preceding aspects in combination with aspect 121, the kinematic pins (54) of the motion-transfer rod (50) emerge out of the groove guide (15).

In a 147th aspect according to any one of the preceding aspects in combination with aspect 104, the front tract (51) of the motion-transfer rod (50) includes a guide channel (57), and wherein the mouthpiece (10) includes a mouthpiece rail (17) protruding into said guide channel (57) of the motion-transfer rod (50), wherein the motion-transfer rod (50) is configured to slide over the mouthpiece (10) along said mouthpiece rail (17).

In a 148th aspect according to the preceding aspect, said mouthpiece rail (17) extends along a:
- a rectilinear path, or
- a curvilinear path, or
- a semi-circular path.

In a 149th aspect according to the preceding aspect, if the mouthpiece rail (17) extends along the rectilinear path, the first motion of the front module (30) is a rectilinear translation motion.

In a 150th aspect according to any one of the two preceding aspects, if the mouthpiece rail (17) extends along the curvilinear path, the first motion of the front module (30) includes the rotational or roto-translation motion.

In a 151st aspect according to any one of the three preceding aspects, if the mouthpiece rail (17) extends along the semi-circular path, the first motion of the front module (30) includes the rotational motion.

In a aspect 151bis according to any one of the preceding aspects, the first motion of the front module (30) is different from the second motion of the back modules (40).

### Transmission system

In a 152nd aspect according to any one of the preceding aspects, the motor (3) is kinematically connected to the brush heads (20) by a rod-crank kinematic system (60).

In a 153rd aspect according to the preceding aspect, an output shaft of the motor (3) carries a crank (61), and a connecting rod (62) connects the crank (61) to the motion-transfer rod (50).

In a 154th aspect according to any one of the two preceding aspects, the rod-crank kinematic system (60) defines an alternating movement of the motion-transfer rod (50).

In an aspect 154 bis according to any one of the preceding aspects, the first motion is a vibration motion. In an aspect 154 ter according to any one of the preceding aspects, the second motion is a vibration motion. In a 155th aspect according to any one of the preceding aspects, the translation motion is a rectilinear translation motion.

In a 156th aspect according to any one of the preceding aspects, the motor is an electric motor.

In a 157th aspect according to any one of the preceding aspects, the dental cleaning device is an electric toothbrush.

In an aspect 157 bis according to any one of the preceding aspects, the handle extends in length between a first end and a second end, the second end being connected to the mouthpiece, wherein the front module (30) is interposed between the back modules (40) and the first end of the handle along said length, in particular along the length direction (X).

In an aspect 157 ter according to any one of the preceding aspects, each back module rotation axis (R) passes through the respective back module (40).

In an aspect 157 quater according to any one of the preceding aspects, each back module rotation axis (R) of the back modules passes through the mouthpiece.

In a 158th aspect according to any one of the preceding aspects, the back module rotation axis (R) of each back module (40) is fixed in position with respect to the mouthpiece (10) and/or the handle (2).

In a 159th aspect according to any one of the preceding aspects in combination with aspects 13, the mouthpiece (10) is symmetrical with respect to a plane orthogonal to the mouthpiece virtual plane (VP) and passing through the front portion (11) of the mouthpiece (10).

In a 160th aspect according to any one of the preceding aspects in combination with aspect 100, the motion-transfer rod (50) is symmetrical with respect to a plane orthogonal to the mouthpiece virtual plane (VP) and optionally passing through the front tract (51) of the motion-transfer rod (50).

In a 161st aspect according to any one of the preceding aspects in combination with aspect 104, the back modules (40) are arranged symmetrically to each other with respect to a plane orthogonal to the mouthpiece virtual plane (VP) and passing through the front portion (11) of the mouthpiece (10).

An aspect 162 is directed to a dental cleaning device (1) comprising:
- a handle (2) configured for being grabbed by a user;
- a mouthpiece (10) connected or connectable to said handle (2) and configured for being inserted into the user's mouth, wherein the mouthpiece (10) defines an arcuate profile;
- a set of brush heads (20) carried by the mouthpiece (10) and configured for cleaning, during a use condition of said dental cleaning device, the user's teeth,
- a motor (3) operatively connected to said set of brush heads (20) and configured to cause a motion of said set of brush heads (20);
- a transmission system connecting kinematically the motor (3) to the brush heads (20),
   wherein the transmission system includes a motion-transfer rod (50) operatively connected to the motor (3) and extending along the arcuate profile of the mouthpiece (10).

In a 163rd aspect according to the preceding aspect, the dental cleaning device (1) is according to any one of the aspects from 1 to 161.

In a 164th aspect according to any one of the two preceding aspects, the set of brush heads (20) includes a front module (30) configured to clean at least the user's incisor teeth, said front module (30) being movable by a first motion, said first motion including a translation motion or a rotational motion around a front module axis external to said front module (30) or a roto-translation motion.

In a 165th aspect according to any one of the preceding aspects in combination with aspect 162, the set of brush heads (20) includes at least a couple of back modules (40) configured to clean at least the user's molar teeth, each of said back modules (40) being movable by a respective second motion, said second motion including a rotational motion around a respective back module rotation axis (R) passing through the respective back module.

In a 166th aspect according to any one of the two preceding aspects, the motor (3) is operatively connected to said set of brush heads (20) and configured to cause the first motion and the second motion of said set of brush heads (20).

In a 167th aspect according to any one of the preceding aspects in combination with aspect 162, the motion-transfer rod (50) is configured to flex, in particular to bend, to transfer an input motion from the motor (3) to the brush heads (20).

In a 168th aspect according to any one of the preceding aspects in combination with aspect 162, the dental cleaning device (1) is according to any one of the aspects from 101 to 161.

In a 169th aspect according to any one of the preceding aspects in combination with aspect 162, the dental cleaning device (1) is according to any one of the aspects from 3 to 100.

In an aspect 169 bis according to any one of the preceding aspects, the molar teeth includes the first molar. In an aspect 169 ter according to any one of the preceding aspects, the molar teeth includes the second molar.

In an aspect 169 quater according to any one of the preceding aspects, the molar teeth includes the third molar.

In an aspect 169 quinquies according to any one of the preceding aspects, the molar teeth includes the first molar and the second molar and optionally also the third molar.

### Customization

In a 170th aspect according to any one of the preceding aspects, the dental cleaning device (1) is customizable based on a measurement process of the user's dental arch. In a 171st aspect according to the preceding aspect, the dental cleaning device (1) is customizable relative to a specific number of back modules installed on the mouthpiece (10).

In a 172nd aspect according to the preceding aspect, the dental cleaning device (1) is customizable relative to a specific number of back modules installed on the left branch and the right branch (13) of the mouthpiece (10), wherein the back modules installed on the left branch (12) are:
- in a different number than the back modules installed on the left branch (14), or
- in the same number as the back modules installed on the left branch (14).

A 173rd aspect is directed to a manufacturing process of a dental cleaning device (1) according to any one of the preceding aspects,
wherein the manufacturing process includes:
- scanning the user's dental arch;
- determining a construction configuration of the dental cleaning device (1) based on data provided by said scanning step, optionally said construction configuration comprising at least one between:
   ∘ a specific number of the back modules (40);
   ∘ a front size of the front module (30) and a back size of the back modules (40);
- assembling the dental cleaning device (1) according to the determined construction configuration.

In a 174th aspect according to the preceding aspect in combination with aspect 13, the construction configuration includes:
- a specific number of the back modules (40) arranged on the left branch (12) of the mouthpiece (10);
- a specific number of the back modules (40) arranged on the right branch (12) of the mouthpiece (10).

In a 175th aspect according to any one of the preceding aspects 173 and 174 and in combination with aspect 13, wherein the construction configuration includes:
- a size of the back modules (40) arranged on the left branch (12) of the mouthpiece (10);
- a size of the back modules (40) arranged on the right branch (13) of the mouthpiece (10).

In a 176th aspect according to any one of the preceding aspects 173, 174 and 175 and in combination with aspect 27, wherein the construction configuration includes:
- a size of the first left back module arranged on the left branch (12) of the mouthpiece (10);
- a size of the second left back module arranged on the left branch (12) of the mouthpiece (10).

In a 177^{th} aspect according to any one of the preceding aspects from 173 to 176 and in combination with aspect 28, wherein the construction configuration includes:
- a size of the first right back module arranged on the right branch (13) of the mouthpiece (10);
- a size of the second right back module arranged on the right branch (13) of the mouthpiece (10).

In a 178^{th} aspect according to any one of the preceding aspects from 173 to 177, wherein the construction configuration includes an angular orientation, with respect to the mouthpiece virtual plane (VP), of the bristles (45) of the back modules (40).

In a 179^{th} aspect according to any one of the preceding aspects from 173 to 178, wherein the construction configuration includes an angular orientation, with respect to the mouthpiece virtual plane (VP), of the bristles (35) of the front module (40).

In a 180^{th} aspect according to any one of the preceding aspects from 173 to 179, wherein the step of scanning the user's dental arch is performed by a 3D scanner.

In a 181st aspect according to any one of the preceding aspects from 173 to 180, the data provided by the scanning step includes 3D data representative of the user's dental arch.

DRAWINGS

Some embodiments and some aspects of the invention will be described below with reference to the attached drawings, provided for illustrative purposes only, wherein:
- Figures 1 and 2 are a perspective views of a dental cleaning device according to the invention;
- Figure 3 is a plain view from an upper side of the dental cleaning device according to the invention;
- Figure 4 is a plain view from a lower side of the dental cleaning device according to the invention;

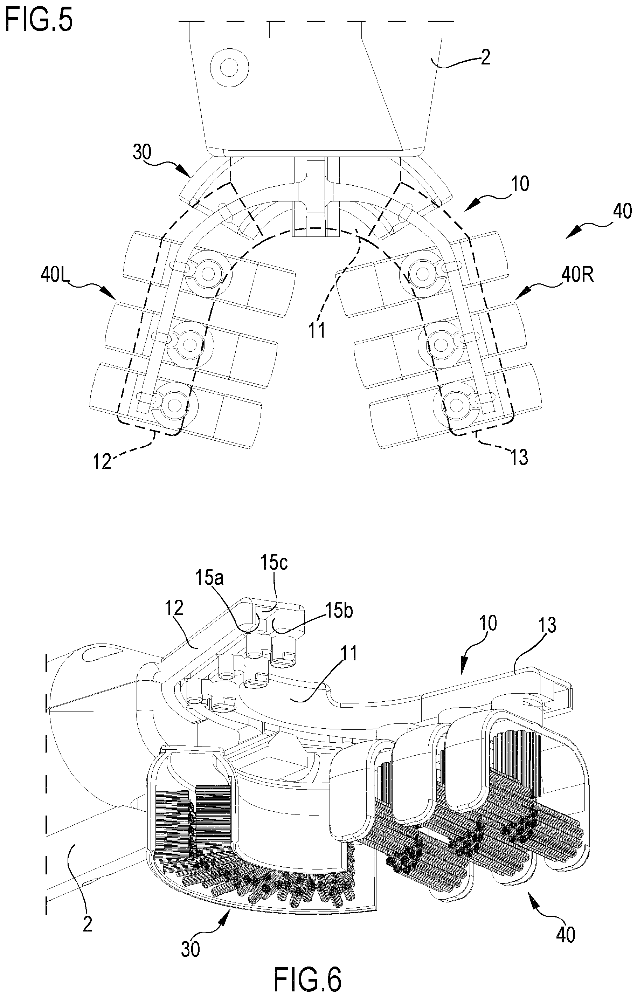

- Figures 5 and 6 are detailed views of the mouthpiece and the motion-transfer rod of the dental cleaning device according to the invention;

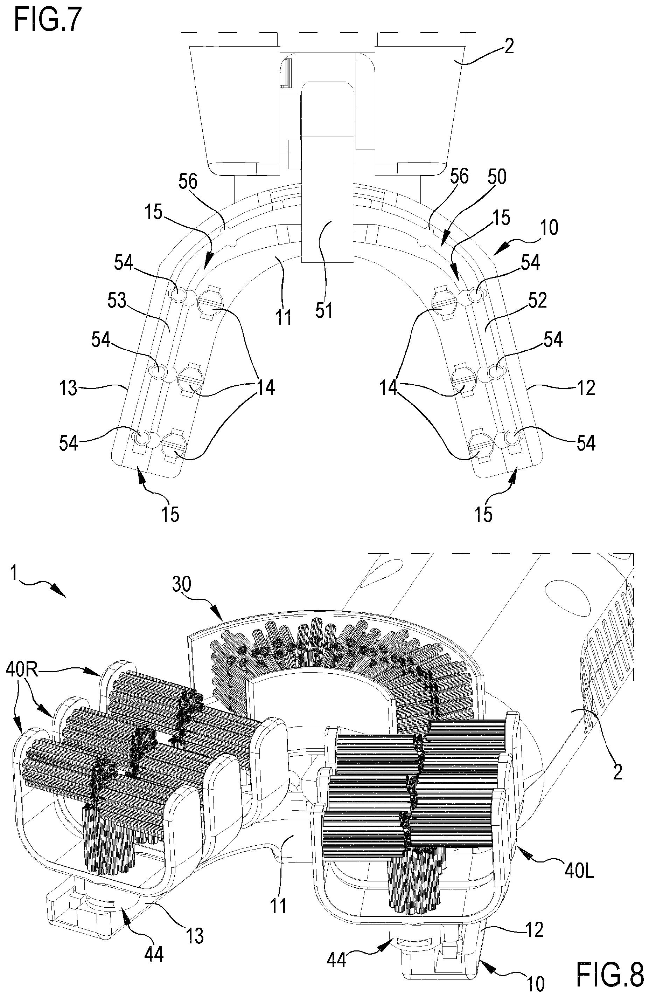

- Figure 7 is a plain view from a lower side of the mouthpiece of the dental cleaning device according to the invention, wherein the brush heads are removed from the mouthpiece;
- Figure 8 is a detailed view of the mouthpiece and the brush heads of the dental cleaning device according to the invention;

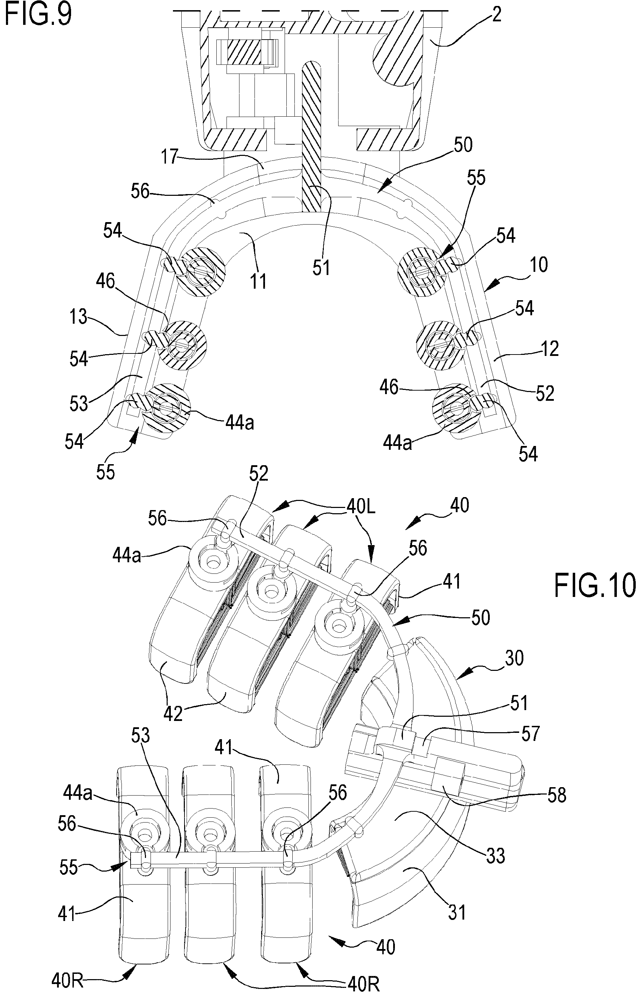

- Figure 9 is a cross section view of the dental cleaning device shown in figure 8 along a plane orthogonal to the back module rotation axes at the level of the kinematic joint between the motion-transfer rod and the back modules;
- Figure 10 shows the motion-transfer rod and the brush heads of the dental cleaning device according to the invention;

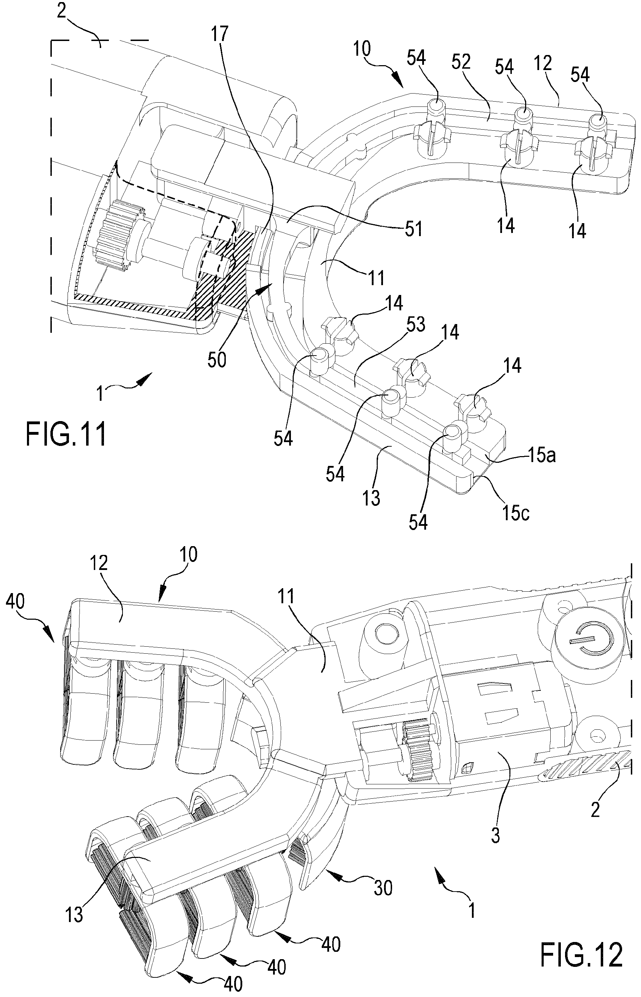

- Figure 11 is a perspective view from a lower side of the mouthpiece of the dental cleaning device according to the invention, wherein the brush heads are removed from the mouthpiece;
- Figure 12 is a perspective view of an internal portion of the handle of the dental cleaning device according to the invention;
- Figure 13 is a schematic view of the rod-crank kinematic system connecting the motor to the motion-transfer rod;

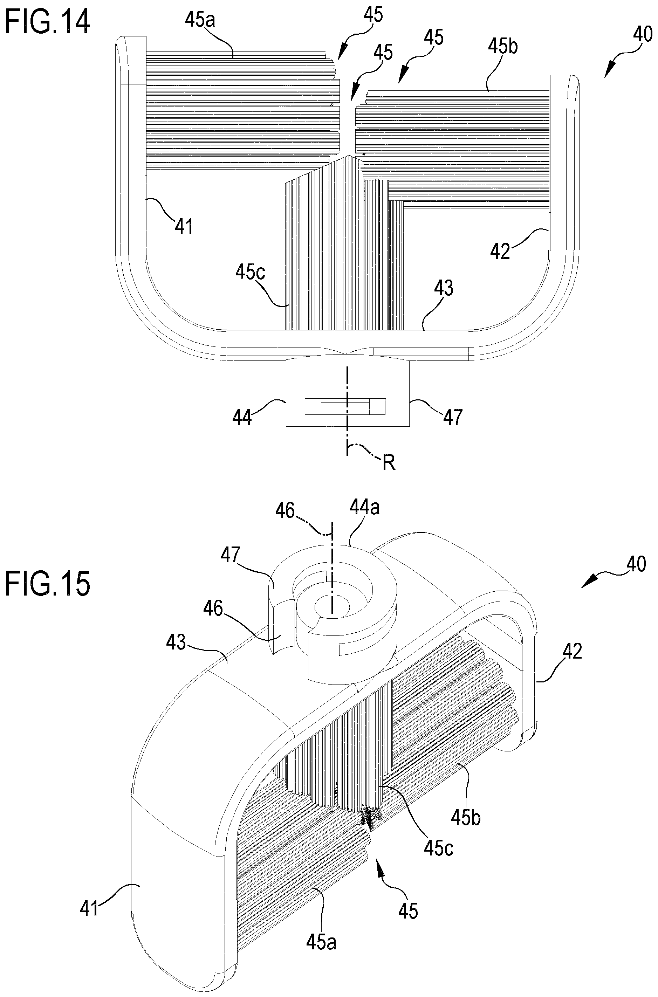

- Figure 14 is a plain view of a back module of the dental cleaning device according to the invention;
- Figure 15 is a perspective view of a back module of the dental cleaning device according to the invention;
- Figure 16 is a plain view of a front module of the dental cleaning device according to the invention;
- Figure 17 is a perspective view of a front module of the dental cleaning device according to the invention;
- Figure 18 is a perspective view of an alternative embodiment of the motion-transfer rod of the mouthpiece according to the invention.

### DEFINITIONS

In this detailed description, corresponding parts illustrated in the various figures are indicated with the same numerical references. The figures may illustrate the invention by means of non-scale representations; therefore, parts and components illustrated in the figures relating to the object of the invention may relate exclusively to schematic representations.

### Control unit

The dental cleaning device described and claimed herein may include at least one control unit responsible for controlling operating conditions.

The control unit may be a single unit or may comprise two or more distinct control units depending on design choices and operational requirements.

The term control unit is directed to an electronic type component which may comprise at least one of: a digital processor (CPU), an analog type circuit, or a combination of one or more digital processors with one or more analog type circuits. The control unit may be *"configured"* or *"programmed"* to perform certain steps: this may be accomplished in practice by any means that allows the control unit to be configured or programmed. For example, in the case of a control unit comprising one or more CPUs and one or more memories, one or more programs may be stored in appropriate memory banks attached to the CPU(s); the program(s) contain instructions that, when executed by the CPU(s), program or configure the control unit to perform the operations described in relation to the control unit. Alternatively, if the control unit is or includes analog type circuitry, then the circuitry of the control unit may be designed to include circuitry configured, in use, to process electrical signals in such a way as to perform the steps related to the control unit.

### DETAILED DESCRIPTION

### Dental cleaning device 1

Reference number 1 is directed to a dental cleaning device, shown in the attached figures, for oral hygiene of a user. The dental cleaning device 1 may be an electric toothbrush.

In generic terms, the dental cleaning device 1 may comprise a handle 2, a mouthpiece 10, a set of brush heads 20, and a motor 3 operatively connected to said set of brush heads 20 for moving the brush heads.

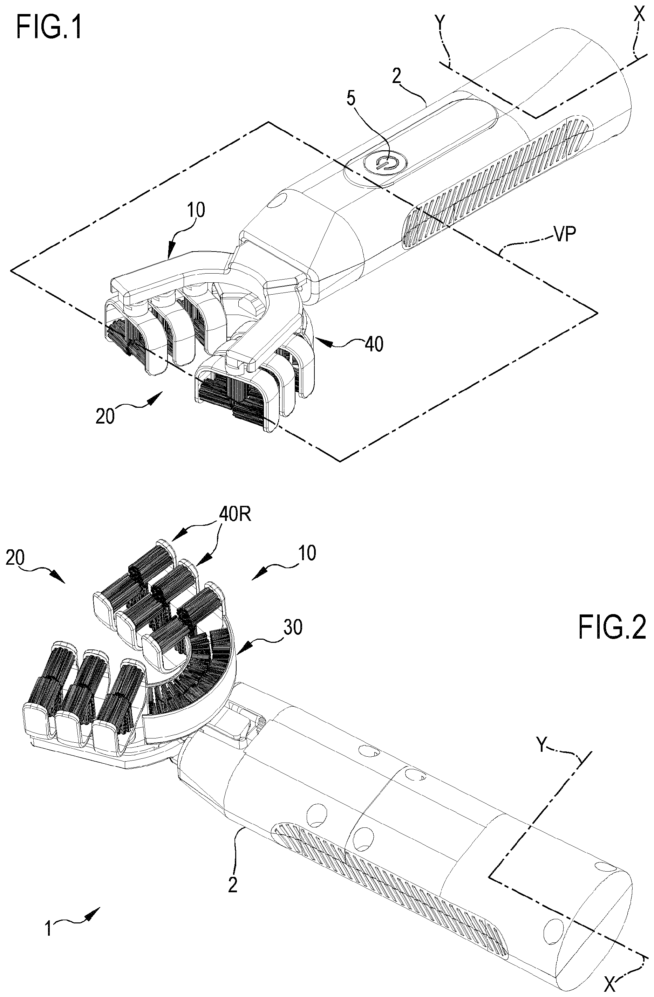

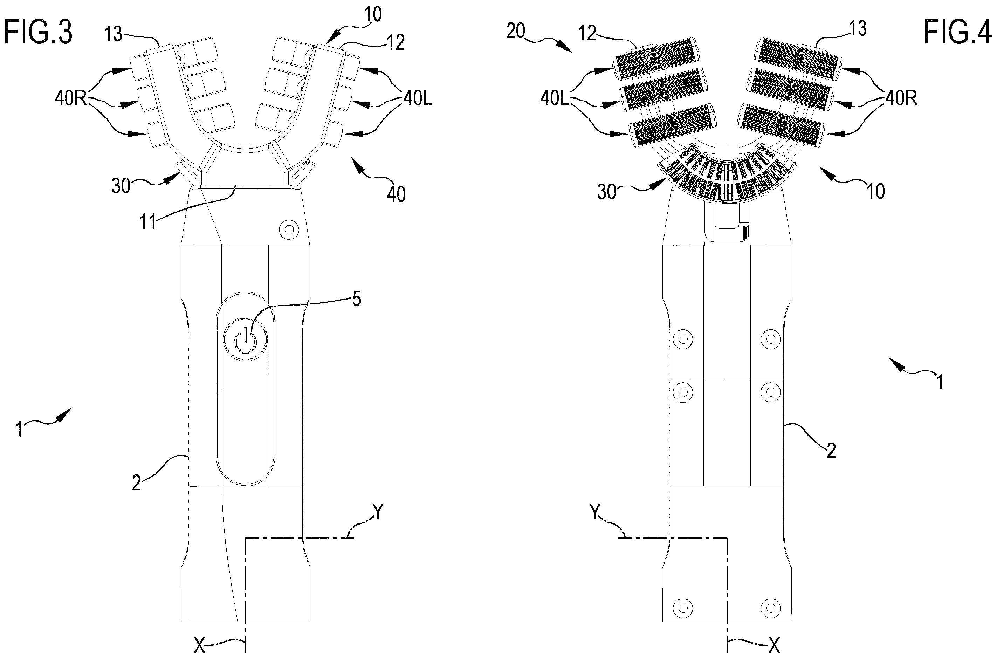

The handle 2 of the dental cleaning device 1, shown in figures 1-4, is configured for being grabbed by a user, to ensure a firm and comfortable grip. The handle may extend along a length direction X by a predefined length, and along a width direction Y by a predefined width, wherein the width direction Y is orthogonal to the length direction X. The length of the handle may be greater than the width thereof. The length of the handle may be comprised between 100 mm and 170 mm. The width of the handle may be comprised between 20 mm and 55 mm. A cross section of the handle, along a cross plane orthogonal to a plane defined by the length direction and the width direction, may define an oblong shape. The handle 3 may be made of a plastic or metallic material.

The handle 2 may comprise an inner volume including a motor housing for receiving the motor 3. The motor 3 may be positioned and installed in said motor housing of the handle 2. The motor 3 of the dental cleaning device 1 is operatively connected to the set of brush heads 20 and configured to cause movement of the brush heads, e.g. a vibration of the brush heads 20. The motor 3 may be an electric motor, e.g. a brush or brushless electric motor. In detail, the motor may be configured to cause a first motion and a second motion of the set of brush heads 20.

The dental cleaning device 1 may comprise an activation button 5 configured to allow the user to activate the dental cleaning device 1. In particular, the activation button 5 is operatively connected to the motor 3 and configured to command, when pressed, activation of the motor and to command, when released, stop of the motor 3.

The inner volume of the handle 2 may also comprise a battery housing configured to receive a battery pack configured to electrically supply the motor 3. The battery pack may be rechargeable: the dental cleaning device 1 may comprise a supply socket, electrically connected to the battery pack, and configured to receive an electrical plug configured to supply electric energy to the battery pack to recharge it.

The set of brush heads 20 are carried by the mouthpiece 10 and configured for cleaning, during a use condition of said dental cleaning device 1, the user's teeth. The brush heads 20 include a number of movable bristles configured for contacting user's teeth during a use condition of the dental cleaning device.

The set of brush heads 20 may include a front module 30 configured to clean at least the user's incisor teeth during a use condition of the dental cleaning device. In other terms the front module 30, when inserted into the user's mouth, contacts at least the incisor teeth of the user. Furthermore, the front module 30, when inserted into the user's mouth, may contact also canine teeth of the user.

The front module 30 may be movable by a first motion: the first motion may include a translation motion, or a rotational motion around a front module axis external to the front module 30, or a roto-translation motion.

The first motion defines an alternating motion, either a translation alternating motion or a rotational alternating motion or a roto-translating alternating motion. The front module 30 is movable according to the first motion back and forth in an alternating manner during a use condition of the dental cleaning device at a predefined first motion frequency. The first motion frequency may be comprised between 16 Hz and 34 Hz. De facto, the first motion may define a vibration motion. The stroke of the front module 30 during the alternating motion may be comprised between 0,5 mm and 5 mm, optionally between 1 mm and 4 mm, more optionally between 1,5 mm and 3 mm.

In case the first motion includes a rotational motion, the correspondent front module axis of the front module is out of the front module 30: de facto, the front module axis does not cross the front module. In detail, the front module may be movable by rotation around the front module axis defining a radius having a length comprised between 5 cm and 200 cm, optionally between 50 cm and 200 cm.

On the contrary, if the first motion includes the translation motion, the front module 30 is movable back and forth along a straight direction, e.g. parallel to the width direction Y.

The front module 30 includes a bottom wall 33, a first lateral wall 31 and a second lateral wall 32 facing the first lateral wall 31, wherein the bottom wall 33 is interposed in connection between the first lateral wall 31 and the second lateral wall 32. The first lateral wall 31 and the second lateral wall 32 extend transversal, and optionally orthogonally, to the mouthpiece virtual plane VP defining a front module channel in between. In particular, the first lateral wall 31 of the front module 30 may be parallel to the second lateral wall 32 of the front module 30. Analogously, the bottom wall 33 of the front module 30 may be orthogonal to the first lateral wall 31 and the second lateral wall 32 of the front module 30.

The front module channel is bounded by the first lateral wall 31, the second lateral wall 32 and the bottom wall 33. The front module channel is configured for receiving at least incisor teeth of the user, optionally for receiving incisors and canines of the user. The first lateral wall 31 and the second lateral wall 32 may be spaced each other by a distance comprised between 6 mm and 15 mm, in particular between 7 mm and 10 mm.

The first lateral wall 31 of the front module 30 may be external to the arcuate profile of the mouthpiece 10, while the second lateral wall 32 of the front module 30 may be internal to the arcuate profile of the mouthpiece 10.

The front module 30 may extend along a curvilinear or semi-circular path parallel to the mouthpiece virtual plane VP (the mouthpiece virtual plane VP is defined after in the description). The path may angularly extend by an angle comprised between 90° and 180°, in particular between 100° and 135°. Notably, the first lateral wall 31 and the second lateral wall 32 of the front module 30 may be concentric to each other. The front module 30 may comprise bristles 35 arranged in the front module channel. In particular, the bristles 35 of the front module 30 may extend along a direction parallel to the mouthpiece virtual plane VP. The bristles 35 of the front module 30 may include a first set 35a of bristles and a second set 35b of bristles, wherein the first set 35a of bristles are attached to the first lateral wall 31, and the second set 35b of bristles are attached to the second lateral wall 32. The first set 35a of bristles and the second set 35b of bristles may be substantially parallel to each other and face each other. Notably, the first set 35a of bristles may be spaced from the second set 35b of bristles by a distance comprised between 1 mm and 4 mm.

The first set 35a of bristles may extend up to a first height measured from the bottom wall 33 of the front module 30, and the second set 35b of bristles may extend up to a second height measured from the bottom wall of the front module 30: the first height may be greater than the second height: in particular, the first height may be greater than the second height by at least 1 mm or 2 mm. Notably, the first height and second height are measured orthogonally to the mouthpiece virtual plane VP, namely along the height extension of the lateral walls.

In an embodiment not shown in the attached figures, the bristles 35 of the front module 30 may extend along a direction which is transversal to the mouthpiece virtual plane VP. The bristles 35 of the front module 30 may extend from the first lateral wall 31 and/or the second lateral wall 32 transversal to the mouthpiece virtual plane VP away from the bottom wall 33 of the front module 30. In particular, the bristles 35 of the front module 30 may deviate from parallelism with the mouthpiece virtual plane VP by a front bristle angle comprised between 5° and 50°, in particular between 15° and 45°, more in particular between 25° and 45°, more in particular between 35° and 45°.

In an embodiment, the bristles 35 of the front module 30 attached to the first lateral wall 31 may deviate from parallelism with the mouthpiece virtual plane VP by a first front bristle angle, while the bristles 35 of the front module 30 attached to the second lateral wall 32 may deviate from parallelism with the mouthpiece virtual plane VP by a second front bristle angle, wherein the first front bristle angle is different from the second front bristle angle. In other terms, the bristles 35 attached to the first and the second lateral walls 31, 32 may be tilted by different angles. In a specific embodiment, the bristles 35 of the front module 30 attached to the first lateral wall 31 may deviate from parallelism with the mouthpiece virtual plane VP by a front bristle angle comprised between 5° and 50°, in particular between 15° and 45°, more in particular between 25° and 45°, more in particular between 35° and 45°, while the bristles 35 of the front module 30 attached to the second lateral wall 32 may be parallel to the mouthpiece virtual plane VP.

The first and second lateral walls 31, 32 of the front module 30 may have "C" or "U" shape. In more detail, a section of the front module 30 along a plane orthogonal to the mouthpiece virtual plane may define a "C" or "U" profile.

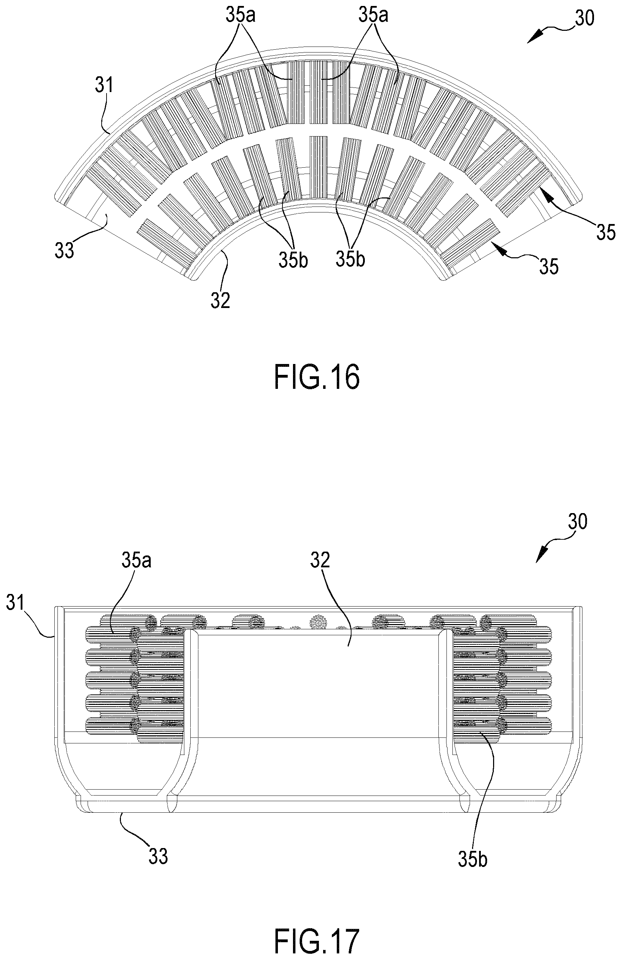

As shown in detail in figures 16 and 17, the bottom wall 33 of the front module 30 may be free of bristles, namely wherein the bottom wall 33 of the front module 30 does not carry bristles.

The set of brush heads 20 may further include at least a couple of back modules 40 configured to clean the user's posterior teeth, wherein the posterior teeth include at least one between a molar and/or premolar teeth. In particular, the molar teeth may include the first molar, the second molar and optionally the third molar of the patient, on the left and right side of the patient's mouth.

The front module 30 may comprise a first front module and a second front module distinct and separated to each other. The first front module and the second front module may be both movable according to the first motion simultaneously. In more detail, the first front module and the second front module may be both movable according to the first motion simultaneously and in the same direction. Alternatively, the first front module and the second front module may be both movable according to the first motion simultaneously in opposite directions, so that when the first front module moves towards a left branch 12 of the mouthpiece 10 according to the first motion, the second front module moves towards a right branch 13 of the mouthpiece 10, and vice versa.

The first front module may be arranged closer to the left branch 12 than to the right branch 13 of the mouthpiece 10, while the second front module may be arranged closer to the right branch 13 than to the right branch 12 of the mouthpiece 10. According to an embodiment, the first front module and the second front module may be symmetric with respect to the length direction X of the dental cleaning device. Alternatively, the first module may be different in shape and/or dimensions with respect to the second front module.

Each of the back modules 40 are movable by a second motion including a rotational motion around a respective back module rotation axis R passing through the respective back module. In other terms, each back module 40 is movable by rotation around a respective back module rotation axis R which crosses the back module itself. Thus, each back module includes its own back module rotation axis R. Each back module rotation axis R is fixed in position with respect to the mouthpiece 10 and/or the handle 2.

The second motion defines an alternating motion around the back module rotation axis R of the respective back module. Each of the back modules 40 is movable by the second motion alternating clockwise and counter-clockwise movement, during the use condition of said dental cleaning device, at a predefined second motion frequency. The second motion frequency may be equal to the first motion frequency. The second motion frequency may be comprised between 16 Hz and 34 Hz. De facto, the second motion defines a vibration motion. Notably, the first motion of the front module 30 is simultaneous to the second motion of the back modules 40. In other terms, the front module 30 is configured to move according to the first motion simultaneously to the second motion of the back modules 40.

Each of the back modules 40 includes a bottom wall 43, a first lateral wall 41 and a second lateral wall 42 facing the first lateral wall 41, wherein the bottom wall 43 is interposed in connection between the first lateral wall 41 and the second lateral wall 42. The first lateral wall 41 and the second lateral wall 42 of the back modules 40 may extend transversal to the mouthpiece virtual plane VP. The bottom wall 43 of the back modules 40 ma extend parallel to the mouthpiece virtual plane VP. In particular, the first lateral wall 41 and the second lateral wall 42 may be orthogonal to the bottom wall 43.

The first lateral wall 41 and the second lateral wall 42 of the back modules 40 may be spaced to each other by a distance comprised between 15 mm and 40 mm, optionally between 20 mm and 30 mm, more optionally between 24 mm and 26 mm.

Each of the back modules 40 is configured for receiving at least molar teeth and optionally also premolars between the first lateral wall 41 and second lateral wall 42 of the back module 40. The first lateral wall 41 of each back module 40 faces externally to the arcuate profile of the mouthpiece 10, while the second lateral wall 42 faces internally to the arcuate profile of the mouthpiece 10. Notably, the first lateral wall 41 may extend in height up to a level higher than the second lateral wall 42 of the back modules 40.

The back modules 40 may be "C" or "U" shaped. In particular, a section of each back module along a plane, parallel and coincident to the respective back module rotation axis R and orthogonal to the first and/or second lateral walls 41, 42 of the back module, defines a "C" or "U" profile.

Each back module 40 may be made in single piece by plastic material.

The back modules 40 comprise also bristles 45. The bristles 45 may be attached to both the first lateral wall 41 and the second lateral wall 42 of the back modules 40. According to the embodiment shown in the attached figures, the bristles 45 may be attached to the first lateral wall 41, the second lateral wall 42, and the bottom wall 43 of the back modules 40. The bristles 45 of the back modules 40 emerging from the first lateral wall 41 and the second lateral wall 42 may extend along a direction parallel to the mouthpiece virtual plane VP. De facto, the bristles 45 of the back modules 40 emerging from the first lateral wall 41 may be parallel to the bristles 45 of the back modules 40 emerging from the second lateral wall 42.

The bristles 45 of the back modules 40 attached to the bottom wall 43 may extend along a direction orthogonal to the mouthpiece virtual plane VP. Thus, the bristles 45 of the back modules 40 attached to the bottom wall 43 may extend orthogonally to the bristles 45 emerging from the first lateral wall 41 and the second lateral wall 42 of the back modules 40.

The back module rotation axis R of each back module 40 crosses the bristles 45 of the back modules 40 attached to the bottom wall 43. The bristles 45 of the back modules 40 attached to the bottom wall 43 may also be positioned around the back module rotation axis R of the respective back module 40.

In detail, the bristles 45 of each back module 40 include a first set 45a of bristles attached to the first lateral wall 41, and a second set 45b of bristles attached to the second lateral wall 42. The first set 45a of bristles and the second set 45b of bristles of the back module 40 are substantially parallel to each other. Furthermore, the first set 45a of bristles of the back module is spaced from the second set 45b of bristles of the same back module 40 by a distance comprised between 1 mm and 4 mm. The back module rotation axis R of each back module may not cross the first set 45a of bristles of the back module 40 and the second set 45b of bristles of the back module 40.

Each back module may include a bottom set 45c of bristles attached to the bottom wall 43 of the back module: the bottom set 45c of bristles extends along a direction parallel to the respective back module rotation axis R. The bottom set 45c of bristles extends along a direction orthogonal to the extension direction of the first set 45a and second set 45b of bristles of the back module.

Notably, the first set 45a of bristles may extend up to a first height measured from the bottom wall 43 of the back module, and the second set 45b of bristles may extend up to a second height measured from the bottom wall 43 of the back module:
the first height may be greater than the second height, in particular wherein the first height is greater than the second height by at least 1 mm or 2 mm. This first height and second height are measured orthogonally to the mouthpiece virtual plane.

The bottom set 45c of bristles of the back modules 40 may extend in height between a bottom end, attached to the bottom wall, and a free portion: the free portion may have a wedge shape, wherein a maximum height of the free portion of the bottom set of bristles is at a central portion thereof.

In an embodiment not shown in the attached figures, said bristles 45 of the back modules 40 may extend along a direction which is transversal to the mouthpiece virtual plane VP. The bristles 45 of the back modules 40 may extend from the first lateral wall 41 and/or the second lateral wall 42 transversal to the mouthpiece virtual plane VP away from the bottom wall 43 of the back module 40. In detail, the bristles 45 of the back modules 40 may deviate from parallelism with the mouthpiece virtual plane VP by a back bristle angle comprised between 5° and 50°, in particular between 15° and 45°, more in particular between 25° and 45°, more in particular between 35° and 45°.

According to an embodiment, the bristles 45 of the back modules 40 attached to the first lateral wall 41 may deviate from parallelism with the mouthpiece virtual plane VP by a first back bristle angle, and the bristles 45 of the back module 40 attached to the second lateral wall 42 deviate from parallelism with the mouthpiece virtual plane VP by a second back bristle angle, wherein the first back bristle angle is different from the second back bristle angle. According to a specific embodiment, the bristles 45 a back module 40, optionally the bristles 45 of all the back modules, attached to the first lateral wall 41 may deviate from parallelism with the mouthpiece virtual plane VP by a back bristle angle comprised between 5° and 50°, in particular between 15° and 45°, more in particular between 25° and 45°, more in particular between 35° and 45°, and the bristles 45 of the same back module 40 attached to the second lateral wall 42 may be parallel to the mouthpiece virtual plane VP.

The back modules 40 are coupled to the mouthpiece 10 by a removable joint 44: for example, the removable joint may include an interlock. The mouthpiece 10 may include coupling pins 14 coupling or configured to couple a coupling portion 44a of the back modules 40. The coupling pins 14 may emerge in height orthogonally to the mouthpiece virtual plane VP. De facto, the removable joint 44 includes the coupling pins 14 of the mouthpiece and the coupling portion 44a of the back modules 40.

The back modules 40 may comprise a left back module 40L arranged on a left branch 12 of the mouthpiece, and a right back module 40R arranged on a right branch 13 of the mouthpiece 10. The transmission system is configured to move, according to the second motion, the left back module 40L and the right back module 40R simultaneously and in the same direction. De facto, during a use condition of the dental cleaning device, when the left back module 40L rotates clockwise, the right back module 40R rotates clockwise as well. Analogously, when the left back module 40L rotates counter-clockwise, the right back module 40R rotates counter-clockwise.

The left back module 40L may include a first left back module, a second left back module, and a third left back module. Analogously, the right back module 40R may include a first right back module, a second right back module, and a third right back module. Preferably, the number of left back modules is equal to the number of right back modules. Notably, the left back module 40L may include a fourth left back module configured to contact a left wisdom tooth of the user. The left wisdom tooth defines a third left molar of the user. Analogously, the right back module 40R may include a fourth right back module configured to contact a right wisdom tooth of the user. The right wisdom tooth defines a third right molar of the user.

Notably, the number of the left back modules may be different from the number of the right back modules. For example, the back modules may include a single left back module and two, three or four right back modules, defining an asymmetric configuration of the back modules.

Notably, the back module rotation axes R of the back modules 40 are parallel each other. In more detail, the back module rotation axis R of the left back module 40L is parallel to the back module rotation axis of the right back module 40R. Still in more detail, the back module rotation axis of the first left back module and the back module rotation axis of the second left back module are parallel to each other, and the back module rotation axis of the first right back module and the back module rotation axis of the second right back module are parallel to each other.

The mouthpiece 10 of the dental cleaning device 1 is connected or connectable to the handle 2 and configured for being inserted into the user's mouth. The mouthpiece may be coupled to an end of the handle 2 and fixed with respect to the handle 2.

The mouthpiece 10 may define an arcuate profile comprising a front portion 11, a left branch 12, and a right branch 13. De facto, the mouthpiece may have a horseshoe shape. In particular, the arcuate profile may be "C" or "U" shaped. The front portion 11 is interposed, along the arcuate profile, in connection between the left branch 12 and the right branch 13. The left branch 12 and the right branch 13 are spaced each other along the width direction Y, while the length direction X crosses the front portion 11 of the mouthpiece 10 orthogonally. In detail, the left branch 12 extends between a first portion attached to the front portion 11 and a second free end, while the right branch 13 extends between a respective first portion attached to the front portion 11 and a respective second free end: the second free end of the left branch 12 is spaced from the second free end of the right branch 13.

The front module 30 is located substantially at the front portion 11, while the left branch 12 and the right branch 13 carry the back modules 40. In detail, the left branch 12 carries, or is configured to carry, the left back module 40L of the back modules 40, while the right branch 13 carries, or is configured to carry, the right back module 40R of the back modules 40.

The front module 30 is movable with respect to the front portion 11 of the arcuate profile of the mouthpiece 10 approaching and departing from the left branch 12 and the right branch 13 of the mouthpiece 10. Notably, if the front module is movable by rotation around the front module axis, the front module axis is interposed between the left branch 12 and the right branch 13 of the mouthpiece 10. In particular, the front module axis may be equidistant from the left branch and the right branch of the mouthpiece 10. The front module axis may be positioned on a symmetry line of the mouthpiece 10: the symmetry line may be coincident and parallel to the length direction X of the dental cleaning device.

The mouthpiece 10, and namely the front portion 11, the left branch 12, and the right branch 13, defines a single body. In particular, the mouthpiece 10, and namely the front portion 11, the left branch 12, and the right branch 13, is made as a single piece. The mouthpiece 10 may be made of plastic material.

A single mouthpiece virtual plane VP, shown in figure 1, passes through the front portion 11, the left branch 12 and the right branch 13 of the mouthpiece 10. Thus, the mouthpiece virtual plane VP is parallel and coincident to the arcuate profile of the mouthpiece 10 and separates an upper side from a lower side of the mouthpiece 10. The front module 30 and the back modules 40 are arranged on one between the lower side and the upper side. For example, the front module 30 and the back modules 40 may be both arranged on the lower side, while the upper side is free of front module and back modules.

The mouthpiece 10 may include a groove guide 15 defining a channel extending along the front portion 11, the left branch 12 and the right branch 13 of the mouthpiece 10. The groove guide 15 defines an arcuate profile: in particular, the groove guide 15 may follow the same arcuate profile of the mouthpiece 10. De facto, the groove guide 15 defines a channel carved into the mouthpiece.

The groove guide 15 may comprise a rear wall 15c, a first side wall 15a and a second side wall 15b, wherein the first side wall 15a faces the second side wall 15b, and wherein the rear wall 15c is interposed in connection between the first side wall 15a and the second side wall 15b. The first side wall 15a and the second side wall 15b may be plane and parallel to each other. The rear wall 15c may be plane and orthogonal to the first side wall 15a and/or the second side wall 15b. The first side wall 15a may be spaced from the second side wall 15b by a distance comprised between 1 mm and 7 mm, in particular between 2 mm and 5 mm.

The transmission system may include a motion-transfer rod 50 operatively connected to the motor 3 and configured for moving alternately forward and backward according to a predefine movement frequency. This movement frequency may be equal to the first motion frequency of the front module and the second motion frequency of the back modules. De facto, the motion-transfer rod 50 vibrates to cause the first motion and the second motion.

The motion-transfer rod 50 may extend along the arcuate profile of the mouthpiece 10 and includes a left tract 52 carried by the left branch 12 of the mouthpiece 10 and extending along the left branch 12, and a right tract 53 carried by the right branch 13 of the mouthpiece 10 and extending along the right branch 13. The motion-transfer rod 50 further include a front tract 51, located at the front portion 11 of the mouthpiece 10, interposed in connection between the right tract 53 and the left tract 52 of the motion-transfer rod 50. The motion-transfer rod 50 is configured to move the front module 30 according to the first motion, and to move the back modules 40 according to the second motion. De facto, the motion-transfer rod 50 acts as a kinematic link between the front module and the back modules. Notably, the motion-transfer rod 50 vibrates to cause the first motion and the second motion.

The motion-transfer rod 50 may be in one piece, in particular wherein the left tract, right tract and front tract of the motion-transfer rod 50 are in one piece. In particular, the motion-transfer rod 50 may be made of plastic material.

The motion-transfer rod 50 is arranged at least partially within the groove guide 15 of the mouthpiece, so that the motion-transfer rod 50 is able to slide with respect to the mouthpiece 10 within the groove guide 15, to cause the first motion of the front module 30, and to cause the second motion of the back modules 40. The motion-transfer rod 50 is located between the first side wall 15a and the second side wall 15b of the groove guide 15: the motion-transfer rod 50 has a width, measured along a direction crossing the first side wall 15a and the second side wall 15b, so that a clearance is provided between the motion-transfer rod 50 and the first side wall 15a and/or the second side wall 15b. This clearance may be comprised between 0,2 mm and 0,8 mm, in particular between 0,35 mm and 0,65 mm. Notably this clearance may be calculated as a difference between a distance between the first side wall 15a and the second side wall 15b, and said width of the motion-transfer rod 50.

Notably, the motion-transfer rod 50 may include two or more protrusions 56, optionally three or four or more protrusions 56, extending towards the first side wall 15a and the second side wall 15b of the groove guide 15. These protrusions 56 are configured to slide over the first side wall 15a and the second side wall 15b of the groove guide 15. The protrusions 56 may have rounded shape to make sliding of the motion-transfer rod 50 smoother. A clearance is provided between these protrusions and the first side wall 15a and the second side wall 15b of the groove guide 15 to allow movement of the motion-transfer rod 50 within the groove guide 15. The protrusions 56 may be arranged at the left tract 52 and the right tract 53 of the motion-transfer rod 50.

The motion-transfer rod 50 is configured to flex while moving within the groove guide 15 with respect to the mouthpiece 10, to follow a trajectory of the channel defined by the groove guide 15. The motion-transfer rod 50 is thus flexible around an axis orthogonal to the mouthpiece virtual plane VP: this axis may be variable in position along the motion-transfer rod 50. De facto the motion-transfer rod 50 is configured to flex, and in particular to bend, to transfer an input motion from the motor 3 to the front module 30, to cause the first motion of the front module 30, and to the back modules 40 to cause the second motion of the back modules 40.

The motion-transfer rod 50 is operatively connected to the front module 30 and the back modules 40 to determine respectively the first motion and the second motion.

The front module 30 is fixed to the front tract 51 of the motion-transfer rod 50: thus, the front tract 51 of the motion-transfer rod 50 is movable along the first motion. The right tract 53 of the motion-transfer rod 50 is movable along a first direction, which may be a straight direction, transversal to the first motion. Analogously, the left tract 52 of the motion-transfer rod 50 is movable along a second direction, which may be a straight direction, transversal to the first motion.

The motion-transfer rod 50 may be operatively connected to the back modules 40 through a kinematic joint 55. The kinematic joint 55 is configured to convert a motion of the motion-transfer rod 50 to the second motion of the back modules 40. In more detail, each of the back modules 40 includes a respective peripheric portion 47 having a recess 46, and the motion-transfer rod 50 includes kinematic pins 54 configured to interact with the recess 46 of the peripheric portion 47 of each back module 40. The recess 46 of the back modules and the kinematic pins 54 of the motion-transfer rod 50 define in combination the kinematic joint 55. Notably the recess 46 of the peripheric portion 47 of the back modules 40 is space from the rotation axis R of the back module.

Each kinematic pin 54 is received in the recess 46 of the respective back module 40, so that the movement of the motion-transfer rod 50 is transferred to the back module, causing the second motion. The kinematic pins 54 of the motion-transfer rod 50 are positioned on the right tract 53 and the left tract 52 of the motion-transfer rod 50.

The kinematic pins 54 emerge from the motion-transfer rod 50 towards the back modules 40, in particular towards the lower side of the mouthpiece 10. The kinematic pins 54 emerge in height from the motion-transfer rod 50 along a direction orthogonal to a movement direction of the motion-transfer rod 50, in particular orthogonally to the mouthpiece virtual plane. The kinematic pins 54 of the motion-transfer rod 50 emerge out of the groove guide 15. Notably, the kinematic pins 54 are equal in number to the number of the back modules 40.

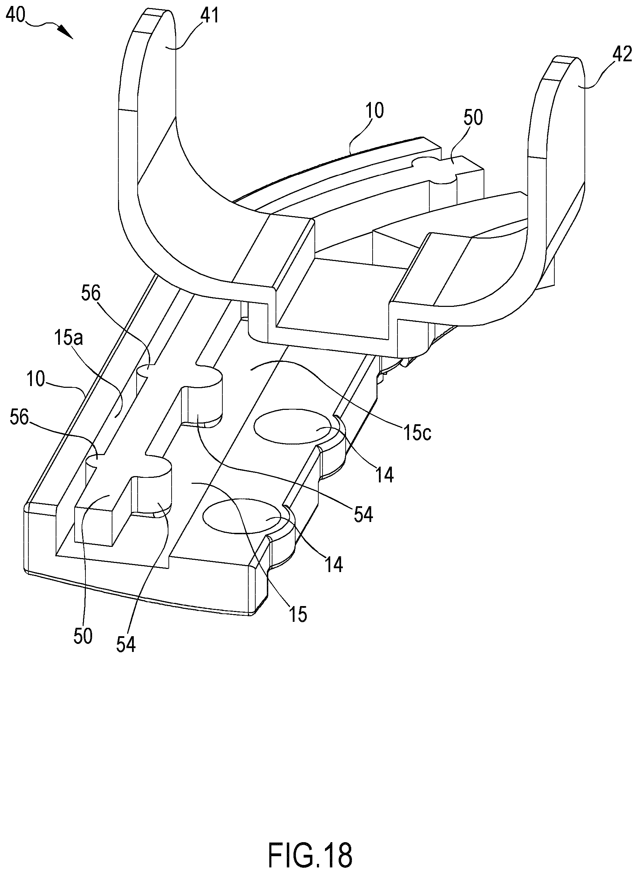

According to an alternative embodiment shown in figure 18, the kinematic pins 54 may emerge from the motion-transfer rod 50 along a direction parallel to the mouthpiece virtual plane VP. The kinematic pins 54 may emerge inwards the arcuate profile of the mouthpiece 10, towards the recess 46 of the peripheric portion 47 of the back modules. The kinematic pins 54 may be lobe-shaped to smoothly transfer the motion from the motion-transfer rod 50 to the back modules. In more detail, the kinematic pins 54 may extend between a first end attached to the motion-transfer rod 50 and a second free end, wherein the second free is rounded. Notably the second free end is configured to enter the recess 46 of the respective peripheric portion 47 of the back modules 40.

The front tract 51 of the motion-transfer rod 50 includes a guide channel 57, and the mouthpiece 10 includes a mouthpiece rail 17 protruding into the guide channel 57 of the motion-transfer rod 50: the motion-transfer rod 50 is configured to slide over the mouthpiece 10 along the mouthpiece rail 17. The mouthpiece rail 17 may extend along a rectilinear path, or a curvilinear path or a semi-circular path. If the mouthpiece rail 17 extends along the rectilinear path, the first motion of the front module 30 is a rectilinear translation motion. If the mouthpiece rail extends along the curvilinear path, the first motion of the front module 30 includes the rotational or roto-translation motion. If the mouthpiece 10 rail extends along the semi-circular path, the first motion of the front module 30 includes the rotational motion.

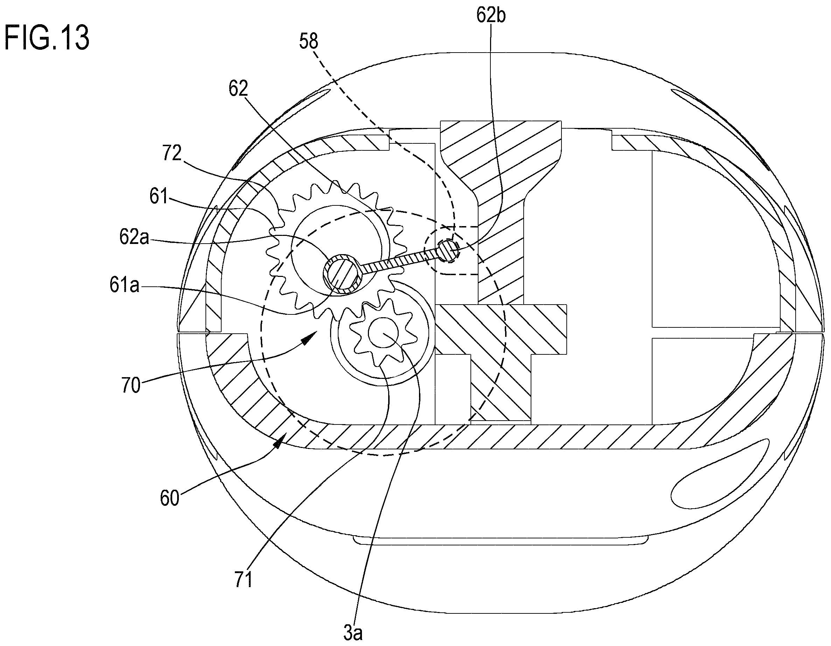

The motor 3 is kinematically connected to the brush heads 20 by a rod-crank kinematic system 60, so that the brush heads are allowed to move according to the first and second motion. In particular, the motor 3 is kinematically connected to the motion-transfer rod 50 by the rod-crank kinematic system 60, which is shown schematically in figure 13. The motor 3 has an output shaft 3a configured to rotated around a motor axis when the motor is activated, namely when the motor 3 is electrically supplied: the motor 3 is configured to move the rod-crank kinematic system 60.

The rod-crank kinematic system includes a crank 61 movable by rotation around a respective crank axis, and a connecting rod 62 connected to the crank 61. A rotation of the crank around the crank axis determines an alternating movement of the connecting rod 62. In detail, the crank includes a crank pin journal 61a, spaced from the crank axis, connected to a first end 62a of the connecting rod 62. A second end 62b of the connecting rod 62 is connected to a linking portion 58 the motion-transfer rod 50. The linking portion 58 of the motion-transfer rod 50 is positioned close to the front tract 51 of the motion-transfer rod 50. Thus, the linking portion 58 of the motion-transfer rod 50, and therefore also the front tract 51 of the motion-transfer rod 50, moves in an alternating manner back and forth as linked to the second end 62b of the connecting rod 62.

The motor 3 may be connected to the crank 61 through a gear reduction system 70 including a first gear 71, fitted on the output shaft 3a of the motor 3, and a second gear 72 carrying the crank 61, wherein the first gear 71 and the second gear 72 engage with each other to define gear reduction system 70. In detail, the first gear 71 is smaller in diameter than the second gear 72, so that the angular speed of the first gear 71 is higher than the angular speed of the second gear 72 when the motor 3 is running.

### Customization

The dental cleaning device 1 may customizable based on a measurement process of the user's dental arch. For example, the dental cleaning device 1 may be customizable relative to the number and/or size of back modules installed on the mouthpiece 10. More in detail, the dental cleaning device 1 may be customizable relative to the number of back modules installed on the left branch and the right branch 13 of the mouthpiece 10. The back modules installed on the left branch 12 may be in a different number than the back modules installed on the left branch 14, or in the same number as the back modules installed on the left branch 14. Thus, a manufacturing process of a dental cleaning device 1 previously described may be performed for customizing the dental cleaning device based on the needs of the user.

The manufacturing process includes a step of scanning the user's dental arch, e.g. by using 3D scanner which provides 3D data representative of the user's dental arch. The 3D data may include a 3D image of the user's dental arch.

The manufacturing process further includes a step of determining a construction configuration of the dental cleaning device 1 based on data provided by the scanning step.

The construction configuration may comprise a specific number of the back modules 40, a front size of the front module 30 and a back size of the back modules 40.

Furthermore, the construction configuration may include a specific number of the back modules 40 arranged on the left branch 12 of the mouthpiece 10, and a specific number of the back modules 40 arranged on the right branch 12 of the mouthpiece 10.

The construction configuration may further include a size of the back modules 40 arranged on the left branch 12 of the mouthpiece 10, and a size of the back modules 40 arranged on the right branch 13 of the mouthpiece 10.

The construction configuration may further include a size of the first left back module arranged on the left branch 12 of the mouthpiece 10, and a size of the second left back module arranged on the left branch 12 of the mouthpiece 10.

The construction configuration may further include a size of the first right back module arranged on the right branch 13 of the mouthpiece 10, and a size of the second right back module arranged on the right branch 13 of the mouthpiece 10.

The construction configuration may further include an angular orientation, with respect to the mouthpiece virtual plane VP, of the bristles 45 of the back modules 40.

The construction configuration may further include an angular orientation, with respect to the mouthpiece virtual plane VP, of the bristles 35 of the front modules 40.

The manufacturing process eventually includes a step of assembling the dental cleaning device 1 according to the determined construction configuration.

## Claims

1. Dental cleaning device (1) comprising:
- a handle (2) configured for being grabbed by a user;
- a mouthpiece (10) coupled or connectable to said handle (2) and configured for being inserted into the user's mouth;
- a set of brush heads (20) carried by the mouthpiece (10) and configured for cleaning, during a use condition of said dental cleaning device (1), the user's teeth,
wherein the set of brush heads (20) includes:
∘ a front module (30) configured to clean at least the user's incisor teeth, said front module (30) being movable by a first motion, said first motion including a translation motion or a rotational motion around a front module axis external to said front module (30) or a roto-translation motion;
∘ at least a couple of back modules (40) configured to clean at least the user's posterior teeth including at least one between a molar and a premolar, each of said back modules (40) being movable by a respective second motion, said second motion including a rotational motion around a respective back module rotation axis (R) passing through the respective back module;
- a motor (3) operatively connected to said set of brush heads (20) and configured to cause the first motion and the second motion of said set of brush heads (20).

2. Dental cleaning device according to the preceding claim, wherein the dental cleaning device comprises
a transmission system connecting kinematically the motor (3) to the brush heads (20),
wherein the transmission system connects in terms of motion the front module (30) to the back modules (40), the motor (3) being kinematically connected to the front module (30) and to the back modules (40) by said transmission system,
wherein the motor (3) or the transmission system is configured to cause the first motion of the front module (30) simultaneously to the second motion of the back modules (40),
wherein said front module (30) is movable by said first motion back and forth in an alternating manner during a use condition of said dental cleaning device at a predefined first motion frequency, said first motion frequency being optionally comprised between 16 Hz and 34 Hz,
and wherein each of said back modules (40) is movable by said second motion alternating clockwise and counter-clockwise movement, during the use condition of said dental cleaning device, at a predefined second motion frequency, said second motion frequency being optionally comprised between 16 Hz and 34 Hz,
the first motion frequency being substantially equal to the second motion frequency.

3. Dental cleaning device according to any one of the preceding claims, wherein the mouthpiece (10) defines an arcuate profile comprising:
- a front portion (11), the front module (30) being located at the front portion (11),
- a left branch (12) carrying, or configured to carry, at least one left back module (40L) of said couple of back modules (40) of the brush heads (20),
- a right branch (13) carrying, or configured to carry, at least one right back module (40R) of said couple of back modules (40) of the brush heads (20),
wherein the front portion (11) is interposed, along said arcuate profile, in connection between the left branch (12) and the right branch (13),
wherein the front module (30) is movable with respect to said front portion (11) of the arcuate profile approaching and departing from said left branch (12) and said right branch (13),
wherein the mouthpiece (10) is fixed with respect to the handle (2),
wherein the dental cleaning device (1) extends along a length direction (X) and a width direction (Y) orthogonal to said length direction (X), the left branch (12) and the right branch (13) being spaced each other along said width direction (Y), the length direction (X) crossing the front portion (11) of the mouthpiece (10) optionally orthogonally,
and wherein:
- the first motion includes the translation motion which is directed along the width direction (Y) of the dental cleaning device (1),
and wherein said translation motion is orthogonal to the back module rotation axes of the back modules (40),
or
- the first motion includes the rotational motion around said front module axis, said front module axis being positioned along a virtual straight line interposed between the left branch (12) and the right branch (13) and equidistant from the left branch (12) and the right branch (13) of the mouthpiece (10).

4. Dental cleaning device according to the preceding claims 2 and 3, wherein the transmission system is configured to move, according to the second motion, the left back module (40L) of the left branch (12) and the right back module (40R) of the right branch (13) simultaneously and in the same direction, wherein, during a use condition of the dental cleaning device:
- when the left back module (40L) of the left branch (12) rotates clockwise, the right back module (40R) of the right branch (13) rotates clockwise;
- when the left back module (40L) of the left branch (12) rotates counter-clockwise, the right back module (40R) of the right branch (13) rotates counter-clockwise.

5. Dental cleaning device according to any one of the preceding claims in combination with claim 3, wherein:
- the left back module (40L) includes a first left back module and a second left back module, optionally the left back module further including a third left back module and a fourth left back module, the fourth left back module being optionally configured to contact a left wisdom tooth of the user, said left wisdom tooth defining a third left molar of the user;
- the right back module (40R) includes a first right back module and a second right back module, optionally the right back module (40R) further including a third right back module and a fourth right back module, the fourth right back module being optionally configured to contact a right wisdom tooth of the user, said right wisdom tooth defining a third right molar of the user,
wherein:
- the first left back module and the second left back module, and optionally also the third left back module, are positioned consecutively with each other along the left branch (12) of the mouthpiece (10);
- the first right back module and a second right back module, and optionally also the third right back module, are positioned consecutively with each other along the right branch (13) of the mouthpiece (10).

6. Dental cleaning device according to any one of the preceding claims, wherein the back module rotation axes (R) of the back modules (40) are parallel to each other,
and wherein:
- if the first motion includes the rotational or roto-translation motion around the front module axes, the back module rotation axes (R) of the back modules (40) are parallel to the front module axis of the front module (30);
- if the first motion includes the translation motion, the back module rotation axes of the back modules (40) are orthogonal to a direction of said translation motion.

7. Dental cleaning device according to any one of the preceding claims in combination with claim 3, wherein a single mouthpiece virtual plane (VP) passes through the front portion (11), the left branch (12) and the right branch (13) of the mouthpiece (10),
wherein said mouthpiece virtual plane (VP) is parallel and coincident to the arcuate profile of the mouthpiece (10),
said mouthpiece virtual plane (VP) separating an upper side from a lower side of the mouthpiece (10), wherein the front module (30) and the back modules (40) are arranged on one between the lower side and the upper side, in particular the front module (30) and the back modules (40) being both arranged on the lower side,
wherein the front module (30) extends along a curvilinear or semi-circular path parallel to said virtual plane (VP), said path angularly extending by an angle comprised between 90° and 180°, in particular between 100° and 135°.

8. Dental cleaning device according to any one of the preceding claims, wherein the front module (30) includes a bottom wall (33), a first lateral wall (31) and a second lateral wall (32) facing the first lateral wall (31), wherein the bottom wall (33) is interposed in connection between the first lateral wall (31) and the second lateral wall (32),
wherein the first lateral wall (31) and the second lateral wall (32) extend transversally to the bottom wall (33), optionally transversally to said mouthpiece virtual plane (VP), defining a front module channel in between,
wherein said front module channel is bounded by the first lateral wall (31), the second lateral wall (32) and the bottom wall (33),
and wherein the front module channel is configured for receiving at least incisor teeth of the user, optionally for receiving incisors and canines of the user,
wherein the front module (30) comprises bristles (35) arranged in said front module channel, wherein said bristles (35) of the front module (30) include a first set (35a) of bristles and a second set (35b) of bristles, wherein the first set (35a) of bristles is attached to the first lateral wall (31), and wherein the second set (35b) of bristles is attached to the second lateral wall (32),
wherein:
- said bristles of the front module (30) extend along a direction parallel to said mouthpiece virtual plane (VP), the first set (35a) of bristles and the second set (35b) of bristles being substantially parallel to each other,
or
- said bristles (35) of the front module (30) extend along a direction which is transversal to the mouthpiece virtual plane (VP), said bristles (35) of the front module (30) extending from the first lateral wall (31) and/or the second lateral wall (32) transversal to the mouthpiece virtual plane (VP) away from the bottom wall (33) of the front module (30).

9. Dental cleaning device according to the preceding claim, wherein the first lateral wall (31) of the front module (30) is external to the arcuate profile of the mouthpiece (10), and the second lateral wall (32) of the front module (30) is internal to the arcuate profile of the mouthpiece (10),
wherein the first set (35a) of bristles extends up to a first height measured from the bottom wall (33) of the front module (30), and wherein the second set (35b) of bristles extends up to a second height measured from the bottom wall (33) of the front module (30),
wherein said first height is greater than said second height by at least 1 mm or 2 mm,
said first height and second height being measured orthogonally to the mouthpiece virtual plane.

10. Dental cleaning device according to any one of the preceding claims, wherein each of the back modules (40) includes a bottom wall (43), a first lateral wall (41) and a second lateral wall (42) facing the first lateral wall (41), wherein the bottom wall (43) is interposed in connection between the first lateral wall (41) and the second lateral wall (42),
wherein the first lateral wall (41) and the second lateral wall (42) of the back modules (40) extend transversal to the bottom wall (43), in particular transversal to said mouthpiece virtual plane (VP), and wherein each of the back modules (40) is configured for receiving at least molar teeth, optionally also premolars and/or wisdom teeth, of the user between said first lateral wall (41) and second lateral wall (42) of the back modules (40),
wherein the back modules (40) comprise bristles (45), said bristles (45) of the back modules (40) being attached to said first lateral wall (41) and said second lateral wall (42) of the back modules (40),
and wherein said bristles (45) are also attached to said bottom wall (43) of the back modules (40), said bristles (45) being fixed in position with respect to the first lateral wall (41), said second lateral wall (42), and said bottom wall (43),
wherein said bristles (45) of each back module (40) include a first set (45a) of bristles and a second set (45b) of bristles, wherein the first set (45a) of bristles are attached to the first lateral wall (41), and wherein the second set (45b) of bristles are attached to the second lateral wall (42),
wherein each back module includes a bottom set (45c) of bristles attached to the bottom wall (43) of said back module, the bottom set (45c) of bristles extending along a direction parallel to the respective back module rotation axis (R), optionally the bottom set (45c) of bristles extending along a direction orthogonal to the extension direction of the first set (45a) of bristles (45) and the second set (45b) of bristles of the back modules,
and wherein:
- the first set (45a) of bristles and the second set (45b) of bristles of the back module (40) are substantially parallel to each other and in particular parallel to said mouthpiece virtual plane (VP),
or
- said bristles (45) of the back modules (40) extend along a direction which is transversal to the mouthpiece virtual plane (VP), wherein said bristles (45) of the back modules (40) extend from the first lateral wall (41) and the second lateral wall (42) transversal to the mouthpiece virtual plane (VP) away from the bottom wall (43) of the back module (40).

11. Dental cleaning device according to the preceding claim, wherein the first lateral wall (41) of each back module (40) faces externally to the arcuate profile of the mouthpiece (10), and the second lateral wall (42) faces internally to the arcuate profile of the mouthpiece (10),
wherein the first lateral wall (41) of the back module (40) includes bristles up to a first height measured from the bottom wall (43) of the back module, and wherein the second lateral wall (42) of the back module (40) includes bristles up to a second height measured from the bottom wall (43) of the back module,
and wherein said first height is greater than said second height by at least 1 mm or 2 mm,
in particular said first height and second height being measured orthogonally to the mouthpiece virtual plane.

12. Dental cleaning device according to any one of the preceding claims in combination with claims 2 and 3, wherein the transmission system includes a motion-transfer rod (50) operatively connected to the motor (3), said motion-transfer rod (50) being configured for moving alternately forward and backward according to a predefined movement frequency,
wherein said motion-transfer rod (50) extends along the arcuate profile of the mouthpiece (10), wherein said motion-transfer rod (50) includes:
- a left tract (52) carried by the left branch (12) of the mouthpiece (10) and extending along said left branch (12),
- a right tract (53) carried by the right branch (13) of the mouthpiece (10) and extending along said right branch (13),
- a front tract (51) located at the front portion (11) of the mouthpiece (10), the front tract (51) being interposed in connection between the right tract (53) and the left tract (52) of the motion-transfer rod (50),
wherein the motion-transfer rod (50) is configured to move the front module (30) according to the first motion, and to move the back modules (40) according to the second motion,
wherein the mouthpiece (10) includes a groove guide (15), optionally defining a channel, extending along the front portion (11), the left branch (12) and the right branch (13) of the mouthpiece (10), wherein the motion-transfer rod (50) is arranged at least partially within said groove guide (15),
and wherein the motion-transfer rod (50) is configured to move, in particular to slide, with respect to the mouthpiece (10) within said groove guide (15) to cause the first motion of the front module (30), and to cause the second motion of the back modules (40).

13. Dental cleaning device according to the preceding claim, wherein the groove guide (15) defines a channel, the motion-transfer rod (50) being configured to flex while moving within said groove guide (15) to follow a trajectory of said channel of the groove guide (15),
wherein the motion-transfer rod (50) is in one piece,
in particular wherein the left tract, right tract and front tract of the motion-transfer rod (50) are in one piece,
and wherein the front tract (51) of the motion-transfer rod (50) is movable along the first motion, the front module (30) being fixed to the front tract (51) of the motion-transfer rod (50),
and wherein the right tract (53) of the motion-transfer rod (50) is movable along a first direction, optionally a straight direction, transversal to said first motion,
and wherein the left tract (52) of the motion-transfer rod (50) is movable along a second direction, optionally a straight direction, transversal to said first motion,
wherein the motion-transfer rod (50) is operatively connected to the back modules (40) through a kinematic joint (55) configured to convert a motion, optionally a translation motion, of the motion-transfer rod (50) in the second motion of the back modules (40).
wherein each of the back modules (40) includes a respective peripheric portion (47) having a recess (46), said recess (46) being spaced from the back module rotation axis (R),
wherein the kinematic joint (55) includes kinematic pins (54), fixed on the motion-transfer rod (50), and each recess (46) of the back modules (40), wherein each kinematic pin (54) is received in the recess (46) of the respective back module (40),
wherein said kinematic pins (54) are configured to interact with said recess (46) of the back modules (40) to cause the second motion.

14. Dental cleaning device according to any one of the preceding claims in combination with claim 12, wherein the front tract (51) of the motion-transfer rod (50) includes a guide channel (57), and wherein the mouthpiece (10) includes a mouthpiece rail (17) protruding into said guide channel (57) of the motion-transfer rod (50),
wherein the motion-transfer rod (50) is configured to slide over the mouthpiece (10) along said mouthpiece rail (17),
said mouthpiece rail (17) extending along a:
- a rectilinear path, or
- a curvilinear path,
- a semi-circular path,
and wherein:
- if the mouthpiece (10) rail extends along the rectilinear path, the first motion of the front module (30) is a rectilinear translation motion;
- if the mouthpiece (10) rail extends along the curvilinear path, the first motion of the front module (30) includes the rotational or roto-translation motion,
- optionally wherein if the mouthpiece (10) rail extends along the semi-circular path, the first motion of the front module (30) includes the rotational motion.

15. Dental cleaning device according to any one of the preceding claims in combination with claim 3, wherein the at least one left back module (40L) is in a different number than the at least one right back module (40R).
